# EUROPÄISCHE PATENTSCHRIFT

(11) **EP 0 570 337 B1**
(45) Veröffentlichungstag und Bekanntmachung des Hinweises auf die Patenterteilung: **18.03.1998**
(21) Anmeldenummer: 93810327.2
(22) Anmeldetag: 04.05.1993
(51) Int. Cl.: C08K 13/02, C08L 57/08

(54) **Stabilisierte chlorhaltige Polymerzusammensetzungen**
Stabilised chlorine-containing polymer compositions
Compositions stabilisées de polymères contenant du chlore

(30) Priorität: 13.05.1992 CH 1536/92
(43) Veröffentlichungstag der Anmeldung: 18.11.1993
(73) Patentinhaber: Ciba Specialty Chemicals Holding Inc., 4057 Basel (CH)
(72) Erfinder: Sander, Hans Jürgen, W-6143 Lorsch (DE); Hartmann, Olaf-René, Dr., W-6140 Bensheim 2 (DE); Wirth, Hermann Otto, Dr., W-6140 Bensheim 3 (DE); Wehner, Wolfgang, Dr., W-6144 Zwingenberg (DE)

(56) Entgegenhaltungen:
- EP-A- 0 062 813
- EP-A- 0 421 933
- EP-A- 0 488 950
- DE-A- 2 233 743
- CHEMICAL ABSTRACTS, vol. 119, no. 14, 4. Oktober 1993, Columbus, Ohio, US; abstract no. 140497t, & JP-A-05 017 648 (NIPPON ZEON CO.; ZEON KASEI K.K.) 26. Januar 1903

## Beschreibung

Die Erfindung betrifft neue chlorhaltige Polymerzusammensetzungen und die Verwendung der Polymerzusammensetzungen.

Aus der EP-A-0 421 933 sind chlorhaltige Polymerzusammensetzungen bekannt, die mindestens ein sterisch gehindertes Amin, mindestens eine Zinkverbindung und mindestens ein Hychotalrit enthalten.

Aus der US-A-4,822,833 sind stabilisierte Hart-PVC-Zusammensetzungen bekannt, die mindestens einen 2,2,6,6-Tetraalkylpiperidin-Lichtstabilisator und mindestens einen Organozinn-Stabilisator enthalten.

Aus der US-A-4,590,233 ist eine Stabilisatorzusammensetzung für halogenhaltige Polymere bekannt, bestehend aus β-Diketonen und einem Zeolith.

Die bekannten Stabilisatoren und Stabilisatorgemische können in den Polymeren nicht allen gestellten Anforderungen entsprechen.

Es wurde nun gefunden, dass die chlorhaltigen Polymerzusammensetzungen, stabilisiert nach vorliegender Erfindung, weiter verbesserte Eigenschaften bezüglich der Thermo- und Lichtstabilität aufweisen.

Erfindungsgemäss wird das mit einer Polymerzusammensetzung mit oder ohne Weichmacher erreicht, enthaltend ein chlorhaltiges Polymer und ein Stabilisatorgemisch, enthaltend:
a) mindestens ein cyclisches oder nicht cyclisches sterisch gehindertes Amin,
b) mindestens eine organische Zinkverbindung und/oder anorganische Zinkverbindung der Reihe der Carbonate, Chloride, Sulfate, Oxide, Hydroxide, der basischen Oxide und Mischoxide, und
c) mindestens eine Verbindung aus der Reihe der kristallinen Alkali-/Erdalkali-alumosilikate.
   Die erfindungsgemässen Polymerzusammensetzungen können weitere Komponenten enthalten.
   So kann die Polymerzusammensetzung als weiteren Stabilisator
d) mindestens ein 1,3-Diketon enthalten.
   Die Polymerzusammensetzung kann als weiteren Stabilisator
e) mindestens eine organische oder anorganische Calciumverbindung enthalten.

Im Umfange vorliegender Erfindung liegen demnach z.B. auch Polymerzusammensetzungen, wie vorbeschrieben, enthaltend im Stabilisatorgemisch eine oder beide der Komponenten d) und e). Demnach werden Polymerzusammensetzungen von vorliegender Erfindung umfasst, welche im Stabilisatorengemisch die Komponenten a), b) und c) oder beispielsweise a), b), c) und d) oder a), b), c) und e) oder a), b), c), d) und e) enthalten.

Zweckmässig sind Polymerzusammensetzungen, wie vorbeschrieben, enthaltend im Stabilisatorgemisch als a) mindestens ein cyclisches sterisch gehindertes Amin, insbesondere eine Verbindung aus der Reihe der Derivate von Polyalkylpiperidinen die mindestens eine Gruppe der Formel III 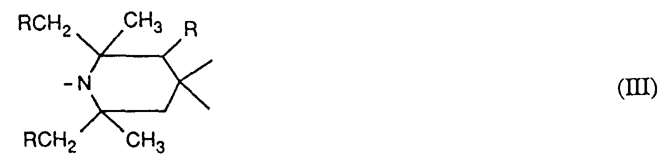 worin R Wasserstoff oder Methyl ist, enthalten; vorzugsweise sind die Polyalkylpiperidingruppen der Formel III in 4-Stellung mit einem oder zwei polaren Substituenten oder einen polaren Spiro-Ringsystem substituiert.

Zweckmässig sind Polymerzusammensetzungen, wie oben beschrieben, enthaltend als b) mindestens eine organische Zinkverbindung aus der Reihe der aliphatischen gesättigten C₂-C₂₂-Carboxylate, der aliphatischen olefinischen C₃-C₂₂-Carboxylate, der aliphatischen C₂-C₂₂-Carboxylate, die mit wenigstens einer OH-Gruppe substituiert sind, der cyclischen und bicyclischen Carboxylate mit 5-22 C-Atomen, der aromatischen C₇-C₂₂-Carboxylate, der mit wenigstens einer OH-Gruppe substituierten aromatischen C₇-C₂₂-Carboxylate, der C₁-C₁₆-alkylsubstituierten Phenylcarboxylate, der Phenyl-C₁-C₁₆-alkylcarboxylate, der C₆-C₁₈-Phenolate, der C₅-C₂₆-Chelate von 1,3-Diketonen oder β-Ketocarbonsäureestern oder Dehydracetsäurederivaten sowie der Mercaptide auf der Basis von Mercaptocarbonsäureester und der Glycinate.

Zweckmässig sind Polymerzusammensetzungen, wie oben beschrieben, enthaltend als c) mindestens eine Verbindung aus der Reihe der Zeolithe.

Zeolithe können durch die allgemeine Formel (X)

M_{x/n}[(AlO₂)ₓ(SiO₂)_{y}]·wH₂O (X)

wobei
n die Ladung des Kations M,
M ein Element der ersten oder zweiten Hauptgruppe,
y : x eine Zahl zwischen 0,8 und 15, bevorzugt zwischen 0,8 und 1,2, und
w eine Zahl zwischen 0 und 300, bevorzugt zwischen 0,5 und 10, ist,
beschrieben werden.

Weiter sind erfindungsgemäss verwendbare Zeolite aus "Atlas of Zeolithe Structure Types", W.M. Meier und D.H. Olson, Verlag Butterworths, 2. Auflage 1986 bekannt.

Die bevorzugten an sich bekannten Zeolithe vom Typ NaA, die einen durchschnittlichen wirksamen Porendurchmesser von 4 Å besitzen, weshalb sie auch als Zeolithe 4A bezeichnet werden, können nach bekannten Methoden hergestellt werden.

Geeignete Syntheseverfahren sind u.a. in der DE-OS 24 12 837 beschrieben. Weitere Einzelheiten zur Beschaffenheit und Herstellung dieser Natrium-Alumosilikate sind beispielsweise den folgenden Literaturstellen zu entnehmen: DE-OS 26 51 485, DE-OS 26 51 445, DE-OS 26 51 436, DE-OS 26 51 419, DE-OS 26 51 420, DE-OS 26 51 437, US-PS 3 112 176.

Bei der Herstellung können durch Ausfällung entstandene amorphe, feinverteilte Natriumalumosilikate durch Erhitzen auf 50 bis 200°C in den kristallinen Zustand überführt werden. Danach wird das kristalline Natriumalumosilikat durch Filtration von der verbleibenden wässrigen Lösung abgetrennt und in der Regel bei 50 bis 200°C getrocknet, bis es einen Wassergehalt von 13 bis 25 Gewichtsprozent aufweist. Die zum Beispiel in der DE-OS 24 12 837 beschriebenen und erfindungsgemäss eingesetzten kristallinen Produkte weisen insbesondere eine Teilchengrösse im Bereich von 0,1 bis 50 µ auf. Für die Durchführung des erfindungsgemässen Verfahrens werden bevorzugt Natriumalumosilikate mit einer Teilchengrösse von 0,1 bis 20 µ eingesetzt. Das bei 22°C bestimmte Calciumbindevermögen der Natriumalumosilikate beträgt wenigstens 50 mg CaO/g wasserfreier Aktivsubstanz und kann Werte von etwa 200 mg CaO/g Aktivsubstanz erreichen. Bevorzugt liegt dieses Calciumbindevermögen im Bereich von 100-200 mg CaO/g Aktivsubstanz und dabei üblicherweise im Bereich oberhalb 150 mg CaO/g. Einzelheiten zur Bestimmung des Calciumbindevermögens sind der zitierten DE-OS 24 12 837 sowie den nachfolgenden Angaben zur Herstellung geeigneter Natriumalumosilikate zu entnehmen.

Besonders bevorzugt sind kristalline Natriumalumosilikate, deren Teilchengrösse wenigstens weitaus überwiegend im Bereich von 1-10 µ liegt.

In einer bevorzugten Ausführung der Erfindung können auch Natriumalumosilikate mit abgerundeten Ecken und Kanten verwendet werden. Zur Herstellung solcher Zeolithe geht man mit Vorteil von einem Ansatz aus, dessen molare Zusammensetzung im Bereich

2,5 - 6,0 Na₂O . Al₂O₃ : 0,5 - 5,0 SiO₂ . 60 - 200 H₂O

liegt. Dieser Ansatz wird in üblicher Weise zur Kristallisation gebracht. Dies geschieht vorteilhafterweise dadurch, dass man den Ansatz wenigstens 1/2 Stunde lang auf 70-120°C, vorzugsweise auf 80-95°C unter Rühren erwärmt. Das kristalline Produkt wird auf einfache Weise durch Abtrennen nachgewaschen und dann getrocknet.

Im Rahmen der Erfindung lassen sich auch solche feinteiligen wasserunlöslichen Natriumalumosilikate verwenden, die in Gegenwart von wasserlöslichen anorganischen oder organischen Dispergiermitteln gefällt und kristallisiert wurden. Als wasserlösliche organische Dispergiermittel eignen sich Tenside, nichttensidartige aromatische Sulfonsäuren und Verbindungen mit Komplexbildungsvermögen gegenüber Calcium. Die genannten Dispergiermittel können in beliebiger Weise vor oder während der Fällung in das Reaktionsgemisch eingebracht werden; sie können zum Beispiel als Lösung vorgelegt oder in der Aluminat- und/oder Silikatlösung aufgelöst werden. Die Menge des Dispergiermittels sollte wenigstens 0,05 Gewichtsprozent, vorzugsweise 0,1-5 Gewichtsprozent, bezogen auf den gesamten Fällungsansatz, betragen. Zum Kristallisieren wird das Fällungsprodukt 1/2 bis 24 Stunden auf 50 bis 200°C erhitzt. Aus der Vielzahl brauchbarer Dispergiermittel sind als Beispiele Natriumlaurylethersulfat, Natriumpolyacrylat und die Natriumsalze der 1-Hydroxyethan-1,1-diphosphonsäure zu nennen.

Die erfindungsgemäss geeigneten Alkali-/Erdalkali-alumosilikate enthalten beispielsweise 13 bis 25 Gewichtsprozent gebundenes Wasser; bevorzugt werden solche Produkte eingesetzt, deren Wassergehalt im Bereich von 18 bis 25 Gewichtsprozent liegen.

Zweckmässig sind Polymerzusammensetzungen, wie oben beschrieben, enthaltend als d) mindestens ein 1,3-Diketon der allgemeinen Formel II oder IIa, 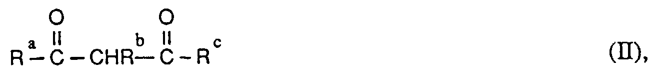 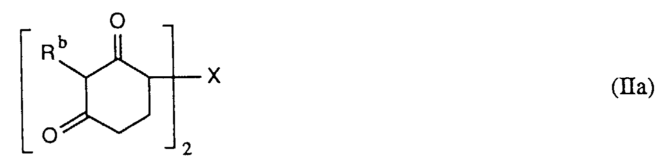 wobei
- R^{a}: Alkyl mit 1 bis 22 C-Atomen, C₅-C₁₀-Hydroxyalkyl, Alkenyl mit 2 bis 22 C-Atomen, Phenyl, mit 1 bis 3 Gruppen der Reihe -OH, C₁-C₄-Alkyl, C₁- bis C₄-Alkoxy oder Halogen substituiertes Phenyl, Phenyl-C₁-C₄-alkyl, eine Gruppe der Formel 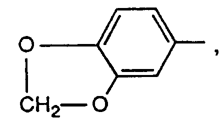 Cycloalkyl mit 5 bis 12 Ring-C-Atomen, oder mit 1 bis 3 C₁-C₄-Alkylgruppen substituiertes Cycloalkyl mit 5 bis 12 Ring-C-Atomen bedeutet,
- R^{c}: Alkyl mit 1 bis 22 C-Atomen, C₅-C₁₀-HydroxyaIkyl, Alkenyl mit 2 bis 22 C-Atomen, Phenyl, mit 1 bis 3 Gruppen der Reihe -OH, C₁-C₄-Alkyl, C₁- bis C₄-Alkoxy oder Halogen substituiertes Phenyl oder Phenyl-C₁-C₄-alkyl, eine Gruppe der Formel 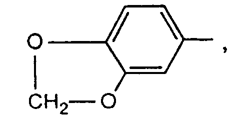 Cycloalkyl mit 5 bis 12 Ring-C-Atomen,
oder mit 1 bis 3 C₁ bis C₄-Alkylgruppen substituiertes Cycloalkyl mit 5 bis 12 Ring-C-Atomen bedeutet,
- R^{b}: -H, Alkyl mit 1 bis 18 C-Atomen, Alkenyl mit 2 bis 12 C-Atomen, Phenyl, C₁-C₄-Alkyl substituiertes Phenyl, Phenyl-C₁-C₄-alkyl, oder eine Gruppe der Formel 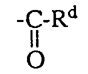 bedeutet,
wobei R^{d}-CH₃, -C₂H₅ oder Phenyl darstellt, oder worin
R^{a} und R^{b} zusammen die Bedeutung eines Tetramethylenrestes oder eines Tetramethylenrestes, der mit einem Benzorest anelliert ist, aufweisen oder R^{a} und R^{c} zusammen die Bedeutung eines Trimethylenrestes oder eines mit 1 bis 3 C₁-C₄-Alkylgruppen substituierten Trimethylenrestes aufweisen, und X Alkylen mit 1-4 C-Atomen bedeutet.

R^{a} und R^{c} als Alkyl mit 1 bis 22 C-Atomen kann beispielsweise Methyl, Ethyl, Propyl, n-Butyl, tert.-Butyl, Pentyl, Hexyl, 2-Ethylhexyl, Nonyl, Decyl, Undecyl, Dodecyl, Tridecyl, Octadecyl oder Eicosyl sein, R^{b} als Alkyl mit 1 bis 18 C-Atomen kann beispielsweise obige Bedeutung ohne Eicosyl haben.

Beispiele von C₅-C₁₀-Hydroxyalkyl für R^{a} und R^{c} sind 5-Hydroxypentyl, 6-Hydroxyethyl oder 7-Hydroxyheptyl.

Beispiele für R^{a} und R^{c} als Alkenyl mit 2 bis 22 C-Atomen sind Vinyl, Propenyl, Allyl, Butenyl, Methallyl, Hexenyl, Decenyl oder Heptadecenyl. Entsprechende Beispiele für R^{b} als Alkenyl mit 2 bis 12 C-Atomen lassen sich sinngemäss obiger Aufzählung entnehmen.

Bei den Phenylgruppen, die mit vorzugsweise ein bis drei Gruppen aus der Reihe -OH, C₁-C₄-Alkyl, C₁-C₄-Alkoxy oder Halogen substituiert sind, wie für R^{a} und R^{c} erwähnt, kann es sich um 4-Hydroxyphenyl-, um 4-Hydroxy-3,5-di-C₁-C₄-alkylphenyl, wobei C₁-C₄-Alkyl beispielsweise Methyl oder t-Butyl ist, um Methylphenyl, Dimethylphenyl, Ethylphenyl, n-Butylphenyl, tert.-Butylphenyl, Methyl-tert.-butylphenyl, di-tert.-Butylphenyl, um Methoxy oder Ethoxyphenyl oder um Monochlorphenyl handeln.

Bedeutet R^{b} C₁-C₄-Alkyl substituiertes Phenyl so sind damit z.B. Methylphenyl, Ethylphenyl oder tert.-Butylphenyl umfasst.

Die Bedeutung von Phenyl-C₁-C₄-alkyl für R^{a}, R^{b} und R^{c} ist beispielsweise Benzyl oder Methylbenzyl.

R^{a} und R^{c} können auch Cycloalkyl mit 5 bis 12 Ring-C-Atomen oder mit 1 bis 3 C₁-C₄-Alkylgruppen substituietes Cycloalkyl mit 5 bis 12 Ring-C-Atomen bedeuten. Beispiele dafür sind Cyclopentyl, Cyclohexyl, Cycloheptyl, Cyclobutyl, Cyclononyl, Cyclododecyl usw., sowie Methylcyclohexyl, Dimethylcyclohexyl, Trimethylcyclohexyl, tert.-Butylcyclohexyl.

### Beispiele für 1,3-Diketone sind:

Dehydracetsäure, Dehydropropionylacetsäure, Dehydrobenzoylacetsäure, Cyclohexan-1,3-dion, Dimedon, 2,2'-Methylenebiscyclohexan-1,3-dion, 2-Benzylcyclohexan-1,3-dion, Acetyltetralon, Palmitoyltetralon, Stearoyltetralon, Benzoyltetralon, 2-Acetylcyclohexanon, 2-Benzoyl-cyclohexanon, 2-Acetyl-cyclohexane-1,3-dion, Benzoyl-p-chlorobenzoylmethan, Bis-(4-methylbenzoyl)methan, Bis-(2-hydroxybenzoyl)methan, Benzoylaceton, Tribenzoylmethan, Diacetylbenzoylmethan, Stearoylbenzoylmethan, Palmitoylbenzoylmethan, Lauroylbenzoylmethan, Dibenzoylmethan, 4-Methoxybenzoylbenzoylmethan, Bis-(4-methoxybenzoyl)methan, Bis-(4-chlorobenzoyl)methan, Bis-(3,4-methylenedioxybenzoyl)methan, Benzoyl- acetyloctylmethan, Benzoylacetylphenylmethan, Stearoyl-4-methoxy-benzoyl-methan, Bis-(4-t-butylbenzoyl)methan, Butanoylaceton, Heptanoylaceton, Distearoylmethan, Acetylaceton, Stearoylaceton, Palmitoylaceton, Lauroylaceton, Benzoylformylmethan, Benzoylphenylacetylmethan, Bis-(cyclohexan-(1,3)-dion-yl)methan oder Di-pivaloylmethan.

Als Costabilisatoren verwendbare 1,3-Diketoverbindungen sind insbesondere jene, die in der DE-B 2 600 516 und der EP-A 35 268 beschrieben sind, z.B. solche der im Patentanspruch der DE-B 2 600 516 angegebenen Formel. Bevorzugte 1,3-Diketoverbindungen sind Benzoylstearoyl-methan, 2-Benzoylacetessigsäurealkyl(z.B. ethyl)-ester und Triacylmethane.

Besonders bevorzugt sind 1,3-Diketone der Formel IIb, 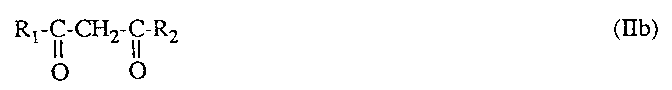 worin R₁ C₁-C₁₀-Alkyl, C₅-C₁₀-Hydroxyalkyl, Phenyl, Hydroxyphenyl, C₇-C₁₀-Phenylalkyl oder am Phenylring durch eine OH-Gruppe substituiertes C₇-C₁₀-Phenylalkyl ist und R₂ C₅-C₁₀-Hydroxyalkyl, Hydroxyphenyl oder am Phenylring durch eine OH-Gruppe substituiertes C₇-C₁₀-Phenylalkyl darstellt, mit der Bedingung, dass R₂ verschieden von Hydroxyphenyl ist, wenn R₁ Phenyl oder Hydroxyphenyl bedeutet.

R₁ bedeutet als C₁-C₁₀-Alkyl zum Beispiel Methyl, Ethyl, n-Propyl, Isopropyl, n-Butyl, tert-Butyl, n-Pentyl, n-Hexyl, n-Heptyl, n-Octyl oder n-Decyl. C₁-C₄-Alkyl, insbesondere Methyl und tert-Butyl, ist bevorzugt.

Beispiele für R₁ und R₂ als C₅-C₁₀-Hydroxyalkyl sind 5-Hydroxypentyl, 1,1-Dimethyl-3-hydroxypropyl, hydroxypropyl, 6-Hydroxyhexyl, 8-Hydroxyoctyl und 10-Hydroxydecyl, 6-Hydroxyhexyl und 7-Hydroxyheptyl sind bevorzugt. Vorzugsweise befindet sich die Hydroxyalkylgruppe nicht in α-Stellung. R₂ bedeutet insbesondere eine Gruppe der Formel -(CH₂)ₙ-OH, worin n eine ganze Zahl von 5 bis 7 darstellt. Von besonderem Interesse ist R₂ als 5-Hydroxypentyl.

Bedeuten R₁ und R₂ Hydroxyphenyl, so kann sich die OH-Gruppe in ortho-, meta- oder para-Stellung befinden. o-Hydroxyphenyl ist bevorzugt.

Beispiele für R₁ als C₇-C₁₀-Phenylalkyl sind Benzyl und 2-Phenylethyl.

R₁ und R₂ bedeuten als C₇-C₁₀-Phenylalkyl, welches am Phenylring durch eine OH-Gruppe substituiert ist, z.B. (2-Hydroxyphenyl)methyl, (3-Hydroxyphenyl)methyl, (4-Hydroxyphenyl)methyl, 2-(2-Hydroxyphenyl)ethyl und 2-(4-Hydroxyphenyl)ethyl.

Innerhalb dieser Stabilisatorgruppe sind Verbindungen bevorzugt mit der obigen Formel IIb, worin R₁ C₁-C₁₀-Alkyl, C₅-C₁₀-Hydroxyalkyl, Phenyl, Hydroxyphenyl, C₇-C₁₀-Phenylalkyl oder am Phenylring durch eine OH-Gruppe substituiertes C₇-C₁₀-Phenylalkyl ist und R₂ C₅-C₁₀-Hydroxyalkyl, Hydroxyphenyl oder am Phenylring durch eine OH-Gruppe substituiertes C₇-C₁₀-Phenylalkyl darstellt, mit der Bedingung, dass R₂ verschieden von Hydroxyphenyl ist, wenn R₁ Phenyl oder Hydroxyphenyl bedeutet.

Besonders bevorzugt sind Verbindungen obiger Formel IIb worin R₁ C₁-C₁₀-Alkyl, C₅-C₁₀-Hydroxyalkyl oder Phenyl bedeutet und R₂ C₅-C₁₀-Hydroxyalkyl oder Hydroxyphenyl ist, oder ganz besonders bevorzugt worin R₁ C₁-C₄-Alkyl oder Phenyl bedeutet und R₂ C₅-C₇-Hydroxyalkyl oder Hydroxyphenyl ist, ferner worin R₂ eine Gruppe -(CH₂)ₙ-OH bedeutet, wobei n eine ganze Zahl von 5 bis 7 darstellt.

Weitere Beispiele besonders bevorzugter Verbindungen obiger Formel IIb sind solche, worin R₁ Methyl, Butyl oder Phenyl ist und R₂ 5-Hydroxypentyl, 6-Hydroxyhexyl, 7-Hydroxyheptyl oder ortho-Hydroxyphenyl darstellt.

Namentlich zu erwähnen sind die bevorzugten Verbindungen der Formel IIb Stearoylbenzoylmethan, Dibenzoylmethan, 1-Phenyl-8-hydroxyoctan-1,3-dion, 1-t-Butyl-8-hydroxyoctan-1,3-dion,1-Methyl-8-hydroxyoctan-1,3-dion oder 1-(o-Hydroxyphenyl)butan-1,3-dion.

Besonders bevorzugt sind auch 1,3-Diketoverbindungen der Formel IIc, 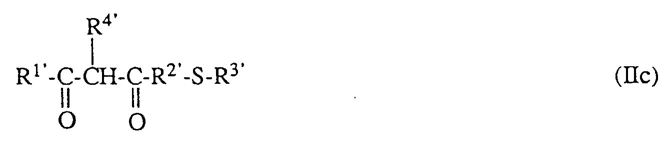 worin R^{1'} und R^{3'} unabhängig voneinander C₁-C₁₂-Alkyl, Phenyl, durch ein bis drei C₁-C₁₂-Alkylgruppen substituiertes Phenyl, C₇-C₁₀-Phenylalkyl oder durch ein bis drei C₁-C₁₂-Alkylgruppen substituiertes C₇-C₁₀-Phenylalkyl und R^{1'} zusätzlich -R^{2'}-S-R^{3'} bedeutet, R^{2'} C₁-C₁₀-Alkylen darstellt und R^{4'} Wasserstoff, C₂-C₅-Alkoxycarbonyl oder C₂-C₅-Alkanoyl ist. Weitere Ausführungen dazu, Beispiele und Bevorzugungen sind der EP 307 358 zu entnehmen.

Zweckmässig sind Polymerzusammensetzungen, wie oben beschrieben, enthaltend als e) mindestens eine Ca-Seife der allgemeinen Formel Ca-(OOCR^{x})₂, wobei R^{x} eine Alkylgruppe mit 1 bis 22 C-Atomen, eine Alkenylgruppe mit 2 bis 22 C-Atomen, Phenyl, Phenyl-C₁-C₄-alkyl oder C₁-C₈-Alkylphenyl darstellt.

Bedeutet R^{x} beispielsweise eine Alkylgruppe mit 1 bis 22 C-Atomen, so sind Beispiele dafür Methyl, Ethyl, Propyl, Isopropyl, n-Butyl, i-Butyl, tert.-Butyl, Pentyl, Hexyl, Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl, 1,1,3,3-Tetramethylhexyl, 1-Methylundecyl, 3,5,5-Trimethylhexyl, Eicosyl, Henicosyl und Docosyl.

Die Bedeutung von R^{x} als Alkenyl mit 2 bis 22 C-Atomen kann beispielsweise Allyl, 2-Methallyl, 2-Butenyl, trans-2-Butenyl, 2-Hexenyl, trans-2,4-Hexadienyl, Decenyl, Undecenyl, Heptadecenyl, Oleyl, cis-9-Octadecenyl, trans-9-Octadecenyl, cis,cis-9,12-Octadecadienyl oder cis,cis,cis-9,12,15-Octadecatrienyl sein.

Bedeutet R^{x} Phenyl-C₁-C₄-alkyl, so sind Beispiele dafür Benzyl oder Methylbenzyl. Ist die Bedeutung von R^{x} C₁-C₈-Alkylphenyl, so sind Beispiele dafür Methylphenyl, Ethylphenyl, Propylphenyl, n-Butylphenyl, tert.-Butylphenyl, Octylphenyl, Dimethylphenyl, Methyl-tert.-butylphenyl und Di-tert.-butylphenyl.

Besonders zweckmässig sind Polymerzusammensetzungen, wie oben beschrieben, enthaltend als Derivat von Polyalkylpiperidinen ein Derivat des 2,2,6,6-Tetramethylpiperidins.

Von Bedeutung sind insbesondere die folgenden Klassen von Polyalkylpiperidinen, die mindestens eine Gruppe der Formel III, wie oben angegeben, tragen:

(a) Verbindungen der Formel IV 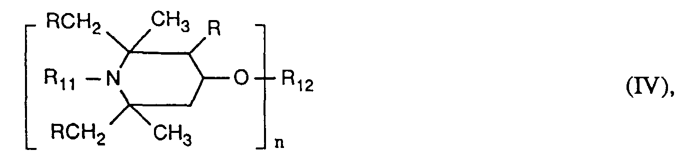 worin n eine Zahl von 1 bis 4, vorzugsweise 1 oder 2 bedeutet, R Wasserstoff oder Methyl bedeutet, R¹¹ Wasserstoff, Oxyl, Hydroxyl, C₁-C₁₂-Alkyl, C₃-C₈-Alkenyl, C₃-C₈-Alkinyl, C₇-C₁₂-Aralkyl, C₁-C₁₈-Alkoxy, C₅-C₈-Cycloalkoxy, C ₇-C₉-PhenylaIkoxy, C₁-C₈-Alkanoyl, C₃-C₅-Alkenoyl, C₁-C₁₈-Alkanoyloxy, Benzyloxy, Glycidyl oder eine Gruppe -CH₂CH(OH)-Z, worin Z Wasserstoff, Methyl oder Phenyl ist, bedeutet, wobei R¹¹ vorzugsweise H, C₁-C₄-Alkyl, Allyl, Benzyl, Acetyl oder Acryloyl ist und R¹², wenn n 1 ist, Wasserstoff, gegebenenfalls durch ein oder mehrere Sauerstoffatome unterbrochenes C₁-C₁₈-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, wenn n 2 ist, C₁-C₁₂-Alkylen, C₄-C₁₂-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Von Interesse sind Verbindungen der Formel IV, mit der Massgabe, dass, wenn n = 2 ist, für R¹² Reste von aliphatischen Dicarbonsäuren der Formel -OOC-(CH₂)₈-COO- ausgeschlossen sind. Von Interesse sind auch Verbindungen der Formel IV, mit der Massgabe, dass, wenn n = 2 ist, für R¹², Reste von aliphatischen Dicarbonsäuren mit 8 bis 12 C-Atomen ausgeschlossen sind.

Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von C₁-C₁₈-Alkyl kann R¹¹ oder R¹² z.B. die oben angeführten Gruppen und dazu noch beispielsweise n-Tridecyl, n-Tetradecyl, n-Hexadecyl oder n-Octadecyl darstellen.

Wenn R¹¹ C₃-C₈-Alkenyl bedeutet, so kann es sich z.B. um l-Propenyl, Allyl, Methallyl, 2-Butenyl, 2-Pentenyl, 2-Hexenyl, 2-Octenyl, 4-tert.-Butyl-2-butenyl handeln.

R¹¹ ist als C₃-C₈-Alkinyl bevorzugt Propargyl.

Als C₇-C₁₂-Aralkyl ist R¹¹ insbesondere Phenethyl und vor allem Benzyl.

R¹¹ ist als C₁-C₈-Alkanoyl beispielsweise Formyl, Propionyl, Butyryl, Octanoyl, aber bevorzugt Acetyl und als C₃-C₅-Alkenoyl insbesondere Acryloyl.

Bedeutet R¹² einen einwertigen Rest einer Carbonsäure, so stellt es beispielsweise einen Essigsäure-, Capronsäure-, Stearinsäure-, Acryl-säure-, Methacrylsäure-, Benzoe- oder β-(3,5-Di-tert.-butyl-4-hydroxy- phenyl)-propionsäurerest dar.

Bedeutet R¹² einen zweiwertigen Rest einer Dicarbonsäure, so stellt es beispielsweise einen Malonsäure-, Bernsteinsäure-, Glutarsäure-, Adipin- säure-, Korksäure-, Sebacinsäure-, Maleinsäure-, Itaconsäure-, Phthal-säure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt R¹² einen dreiwertigen Rest einer Tricarbonsäure dar, so bedeutet es z.B. einen Trimellitsäure-, Citronensäure- oder Nitrilotriessigsäurerest.

Stellt R¹² einen vierwertigen Rest einer Tetracarbonsäure dar, so bedeutet es z.B. den vierwertigen Rest von Butan-1,2,3,4-tetracarbonsäure oder von Pyromellitsäure.

Bedeutet R¹² einen zweiwertigen Rest einer Dicarbaminsäure, so stellt es beispielsweise einen Hexamethylendicarbaminsäure- oder einen 2,4-Toluylen-dicarbaminsäurerest dar.

Bevorzugt sind Verbindungen der Formel IV, worin R Wasserstoff ist, R¹¹ Wasserstoff oder Methyl ist, n 2 ist und R¹² der Diacylrest einer aliphatischen Dicarbonsäure mit 4-12 C-Atomen ist.

Beispiele für Polyalkylpiperidin-Verbindungen dieser Klasse sind folgende Verbindungen:
1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6, 6-tetramethylpiperidin-4-yl)-ester
22) Dibutyl-malonsäure-di-(1,2,2,6,6-pentamethylpiperidin4-yl)-ester
23) Butyl-(3,5-di-tert.-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebaca t
26) Hexan-1',6'-bis-(4-carbamoyloxy-1-n-butyl-2,2,6,6-tetramethyl-piperidin)
27)Toluol-2',4'-bis-(4-carbamoyloxy-1-n-propyl-2,2,6,6-tetrameth-yl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

(b) Verbindungen der Formel (V) 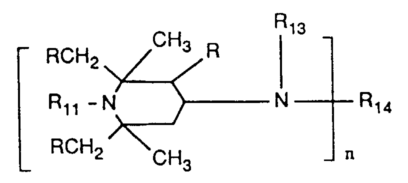 worin n die Zahl 1 oder 2 bedeutet, R und R¹¹ die unter (a) angegebene Bedeutung haben, R¹³ Wasserstoff, C₁-C₁₂-Alkyl, C₂-C₅-Hydroxyalkyl, C₅-C₇-Cycloalkyl, C₇-C₈-Aralkyl, C₂-C₁₈-Alkanoyl, C₃-C₅-Alkenoyl, Benzoyl oder eine Gruppe der Formel 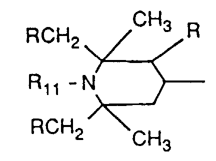 ist und R¹⁴ wenn n 1 ist, Wasserstoff, C₁-C₁₈-Alkyl, C₃-C₈-Alkenyl, C₅-C₇-Cycloalkyl, mit einer Hydroxy-, Cyano-, Alkoxycarbonyl- oder Carbamidgruppe substituiertes C₁-C₄-Alkyl, Glycidyl, eine Gruppe der Formel -CH₂-CH(OH)-Z oder der Formel -CONH-Z ist, worin Z Wasserstoff, Methyl oder Phenyl bedeutet; wenn n 2 ist, C₂-C₁₂-Alkylen, C₆-C₁₂-Arylen, Xylylen, eine -CH₂-CH(OH)-CH₂-Gruppe oder eine Gruppe -CH₂-CH(OH)-CH₂-O-D-O- bedeutet, worin D C₂-C₁₀-Alkylen, C₆-C₁₅-Arylen, C₆-C₁₂-Cycloalkylen ist, oder vorausgesetzt, dass R¹³ nicht Alkanoyl, Alkenoyl oder Benzoyl bedeutet, R¹⁴ auch einen zweiwertigen Rest einer aliphatischen, cycloaliphatischen oder aromatischen Dicarbonsäure oder Dicarbaminsäure oder auch die Gruppe -CO- bedeuten kann, oder R¹³ und R¹⁴ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten C₁-C₁₂- oder C₁-C₁₈-Alkyl dar, so haben sie die bereits unter (a) angegebene Bedeutung.

Bedeuten etwaige Substituenten C₅-C₇-Cycloalkyl, so stellen sie insbesondere Cyclohexyl dar.

Als C₇-C₈-Aralkyl ist R¹³ insbesondere Phenylethyl oder vor allem Benzyl. Als C₂-C₅-Hydroxyalkyl ist R¹³ insbesondere 2-Hydroxyethyl oder 2-Hydroxypropyl.

R¹³ ist als C₂-C₁₈-Alkanoyl beispielsweise Propionyl, Butyryl, Octanoyl, Dodecanoyl, Hexadecanoyl, Octadecanoyl, aber bevorzugt Acetyl und als C₃-C₅-Alkenoyl insbesondere Acryloyl.

Bedeutet R¹⁴ C₂-C₈-Alkenyl, dann handelt es sich z.B. um Allyl, Methallyl, 2-Butenyl, 2-Pentenyl, 2-Hexenyl oder 2-Octenyl.

R¹⁴ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten C₆-C₁₅-Arylen, so stellen sie z.B. o-, m- oder p-Phenylen, 1,4-Naphthylen oder 4,4'-Diphenylen dar.

Als C₆-C₁₂-Cycloalkylen ist insbesondere Cyclohexylen zu nennen.

Bevorzugt sind Verbindungen der Formel V, worin n 1 oder 2 ist, R Wasserstoff ist, R¹¹ Wasserstoff oder Methyl ist, R¹³ Wasserstoff, C₁-C₁₂-Alkyl oder eine Gruppe der Formel 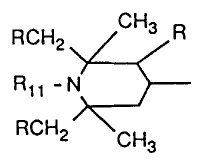 ist und R¹⁴ im Fall von n=1 Wasserstoff oder C₁-C₁₂-Alkyl ist, und im Fall von n=2 C₂-C₈-Alkylen ist.

Beispiele für Polyalkylpiperidin-Verbindungen dieser Klasse sind folgende Verbindungen:
37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-di-acetamid
39) Bis-(2,2,6,6-tetramethylpiperidin-4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel 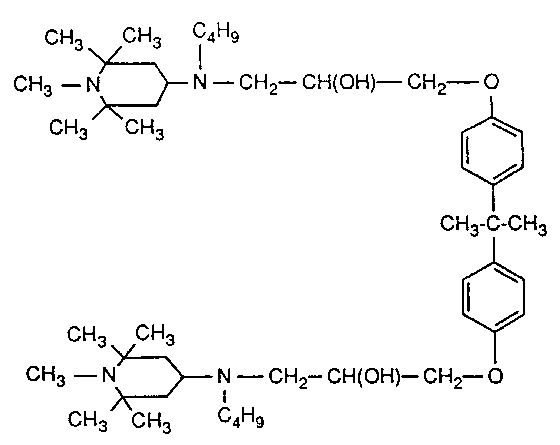
47) 4-(Bis-2-hydroxyethyl-amino)-1,2,2,6,6-pentamethylpiperidin
48) 4-(3-Methyl-4-hydroxy-5-tert.-butyl-benzoesäureamido)-2,2,6,6-tetra-methylpiperidin
49) 4-Methacrylamido-1,2,2,6,6-pentamethylpiperidin

(c) Verbindungen der Formel (VI) 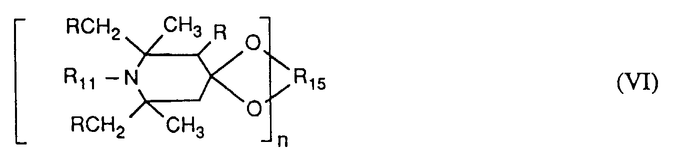 worin n die Zahl 1 oder 2 bedeutet, R und R¹¹ die unter (a) angegebene Bedeutung haben und R¹⁵, wenn n 1 ist, C₂-C₈-Alkylen oder -Hydroxyalkylen oder C₄-C₂₂-Acyloxyalkylen, wenn n 2 ist, die Gruppe (-CH₂)₂C(CH₂-)₂ bedeutet.

Bedeutet R¹⁵ C₂-C₈-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als C₄-C₂₂-Acyloxyalkylen bedeutet R¹⁵ z.B. 2-Ethyl-2-acetoxymethylpropylen.

Beispiele für Polyalkylpiperidin-Verbindungen dieser Klasse sind folgende Verbindungen:
50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro[5.5]undecan
54) 9-Aza-3-ethyl-3-acetoxymethyl-9-acetyl-8,8,10,10-tetramethyl-1,5-dioxaspiro[5.5]-undecan
55) 2,2,6,6-Tetramethylpiperidin-4-spiro-2'-(1',3'-dioxan)-5'-spiro-5"-(1",3"-dioxan)-2"-spiro-4‴-(2‴,2‴,6‴,6‴-tetramethylpiperidin).

(d)Verbindungen der Formeln VIIA, VIIB und VIIC, wobei Verbindungen der Formeln VIIA bevorzugt sind, 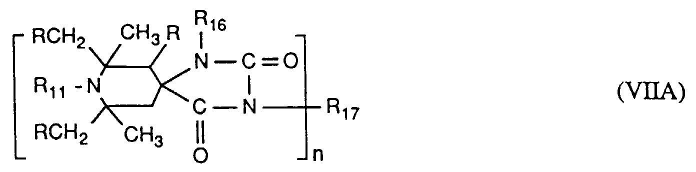 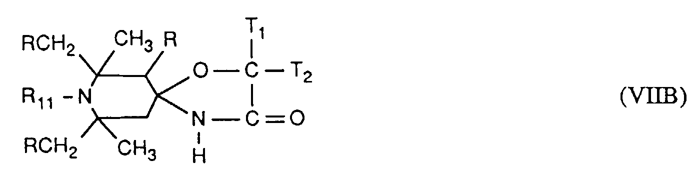 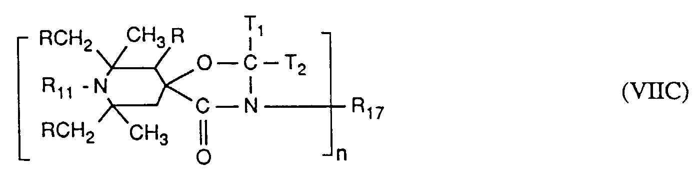 worin n die Zahl 1 oder 2 bedeutet, R und R¹¹ die unter (a) angegebene Bedeutung haben, R¹⁶ Wasserstoff, C₁-C₁₂-Alkyl, Allyl, Benzyl, Glycidyl oder C₂-C₆-Alkoxyalkyl ist und R¹⁷, wenn n 1 ist, Wasserstoff, C₁-C₁₂-Alkyl, C₃-C₅-Alkenyl, C₇-C₉-Aralkyl, C₅-C₇ Cycloalkyl, C₂-C₄-Hydroxyalkyl, C₂-C₆-Alkoxyalkyl, C₆-C₁₀-Aryl, Glycidyl oder eine Gruppe der Formel -(CH₂)ₚ-COO-Q oder der Formel -(CH₂)ₚ-O-CO-Q ist, worin p 1 oder 2 und Q C₁-C₄ Alkyl oder Phenyl sind, wenn n 2 ist, C₂-C₁₂ Alkylen, C₄-C₁₂-Alkenylen, C₆-C₁₂ Arylen, eine Gruppe -CH₂-CH(OH)-CH₂-O-D-O-CH₂-CH(OH)-CH₂-, worin D C₂-C₁₀ Alkylen, C₆-C₁₅-Arylen, C₆-C₁₂ Cycloalkylen ist, oder eine Gruppe -CH₂CH(OZ')CH₂-(OCH₂-CH(OZ')CH₂)₂- bedeutet, worin Z' Wasserstoff, C₁-C₁₈-Alkyl, Allyl, Benzyl, C₂-C₁₂-Alkanoyl oder Benzoyl ist, T₁ und T₂ unabhängig voneinander Wasserstoff, C₁-C₁₈-Alkyl oder gegebenenfalls durch Halogen oder C₁-C₄-Alkyl substituiertes C₆-C₁₀-Aryl oder C₇-C₉-Aralkyl bedeuten oder T₁ und T₂ zusammen mit dem sie bindenden C-Atom einen C₅-C₁₂-Cycloalkanring bilden.

Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von C₁-C₁₈-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten C₂-C₆-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt R¹⁷ C₃-C₅-Alkenyl dar, so bedeutet es z.B. 1-Propenyl, Allyl, Methallyl, 2-Butenyl oder 2-Pentenyl.

Als C₇-C₉-Aralkyl sind R¹⁷, T₁ und T₂ insbesondere Phenethyl oder vor allem Benzyl. Bilden T₁ und T₂ zusammen mit dem C-Atom einen Cycloalkanring, so kann dies z.B. ein Cyclopentan-, Cyclohexan-, Cyclooctan- oder Cyclododecanring sein.

Bedeutet R¹⁷ C₂-C₄-Hydroxyalkyl, so stellt es z.B. 2-Hydroxyethyl, 2-Hydroxypropyl, 2-Hydroxybutyl oder 4-Hydroxybutyl dar.

Als C₆-C₁₀-Aryl bedeuten R¹⁷, T₁ und T₂ insbesondere Phenyl, α- oder β-Naphthyl, die gegebenenfalls mit Halogen oder C₁-C₄-Alkyl substituiert sind.

Stellt R¹⁷ C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als C₄-C₁₂-Alkenylen bedeutet R¹⁷ insbesondere 2-Butenylen, 2-Pentenylen oder 3-Hexenylen.

Bedeutet R¹⁷ C₆-C₁₂ Arylen, so stellt es beispielsweise o-, m- oder p-Phenylen, 1,4-Naphthylen oder 4,4'-Diphenylen dar.

Bedeutet Z' C₂-C₁₂ Alkanoyl, so stellt es beispielsweise Propionyl, Butyryl, Octanoyl, Dodecanoyl, aber bevorzugt Acetyl dar.

D hat als C₂-C₁₀ Alkylen, C₆-C₁₅ Arylen oder C₆-C₁₂ Cycloalkylen die unter (b) angegebene Bedeutung.

Beispiele für Polyalkylpiperidin-Verbindungen dieser Klasse sind folgende Verbindungen:
56) 3-Benzyl-1,3,8-triaza-7,7,9,9-tetramethylspiro[4.5]decan-2,4-dion
57) 3-n-Octyl-1,3,8-triaza-7,7,9,9-tetrarnethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-Iso-propyl-7,7,9,9-tetramethyl-1-oxa-3,8-diaza-4-oxo-spiro-[4.5]decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21-oxo-dispiro[5.1.11.2]-heneicosan
64) 2-Butyl-7,7,9,9-tetramethyl-1-oxa-4,8-diaza-3-oxo-spiro-[4,5]decan
   und bevorzugt:
65) 8-Acetyl-3-dodecyl-1,3,8-triaza-7,7,9,9-tetramethylspiro[4,5]-decan-2,4-dion
   oder die Verbindungen der folgenden Formeln:

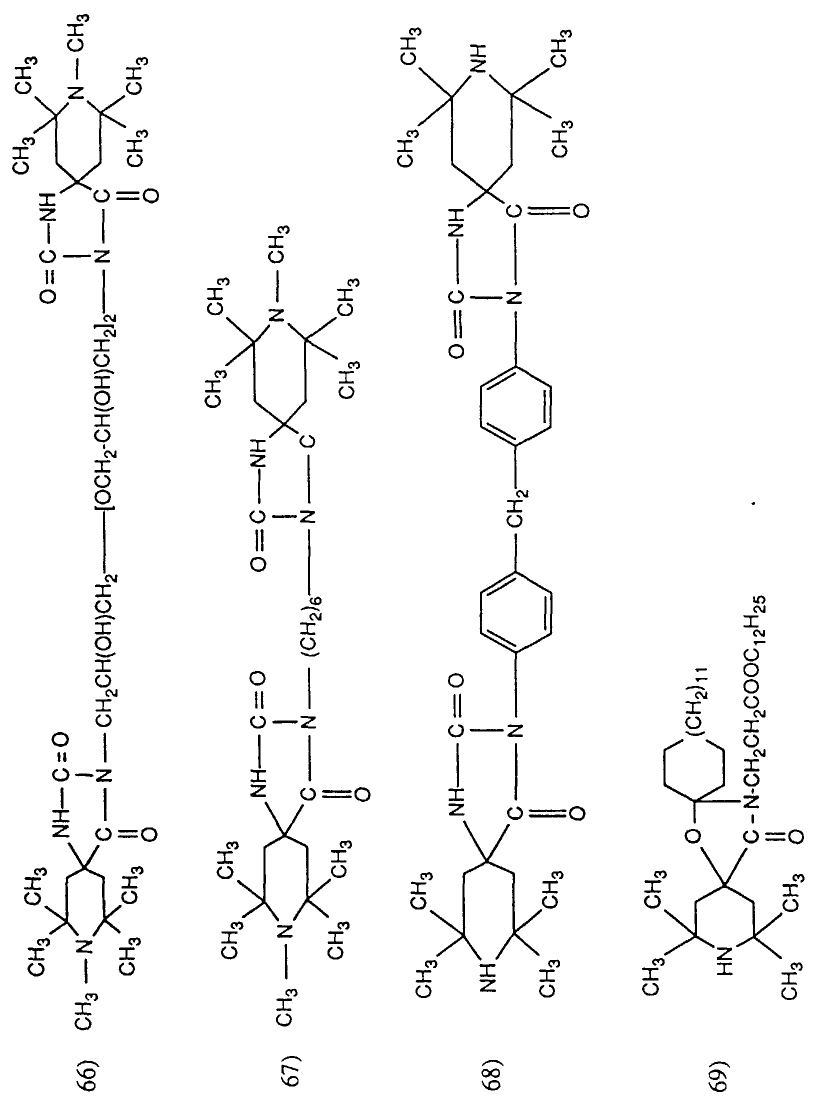

(e) Verbindungen der Formel VIII, die ihrerseits bevorzugt sind, 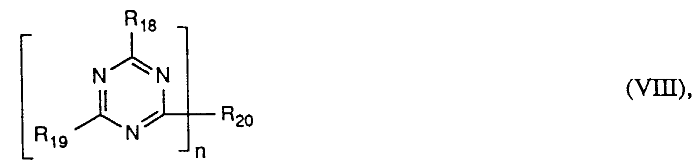 worin n die Zahl 1 oder 2 ist und R¹⁸ eine Gruppe der Formel 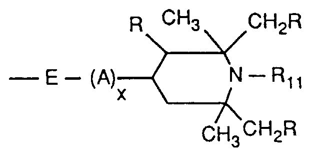 bedeutet, worin R und R¹¹ die unter (a) angegebene Bedeutung haben, E -O- oder -NR¹¹- ist, A C₂-C₆-Alkylen oder -(CH₂)₃-O- und x die Zahlen O oder 1 bedeuten, R¹⁹ gleich R¹⁸ oder eine der Gruppen -NR²¹R²², -OR²³, -NHCH₂OR²³ oder -N(CH₂OR²³)₂ ist, R²⁰, wenn n = 1 ist, gleich R¹⁸ oder R¹⁹, und wenn n = 2 ist, eine Gruppe -E-B-E- ist, worin B gegebenenfalls durch -N(R²¹)- unterbrochenes C₂-C₆-Alkylen bedeutet, R²¹ C₁-C₁₂-Alkyl, Cyclohexyl, Benzyl oder C₁-C₄-Hydroxyalkyl oder eine Gruppe der Formel 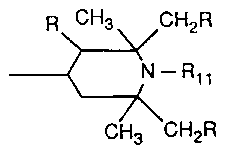 ist, R²² C₁-C₁₂ Alkyl, Cyclohexyl, Benzyl, C₁-C₄ Hydroxyalkyl und R²³ Wasserstoff, C₁-C₁₂ Alkyl oder Phenyl bedeuten oder R²¹ und R²² zusammen C₄-C₅-Alkylen oder -Oxaalkylen, beispielsweise 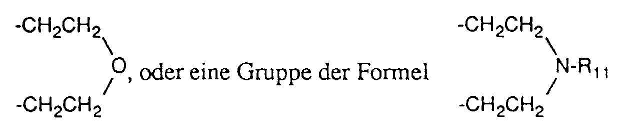 sind oder auch R²¹ und R²² jeweils eine Gruppe der Formel 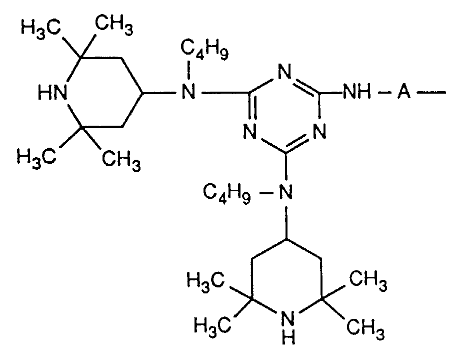 bedeuten.

Bedeuten etwaige Substituenten C₁-C₁₂-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten C₁-C₄-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A C₂-C₆ Alkylen, so stellt es beispielsweise Ethylen, Propylen, 2,2-Dimethylpropylen, Tetramethylen oder Hexamethylen dar.

Stellen R²¹ und R²² zusammen C₄-C₅-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:

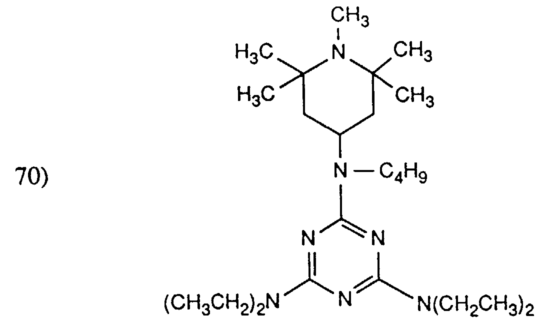

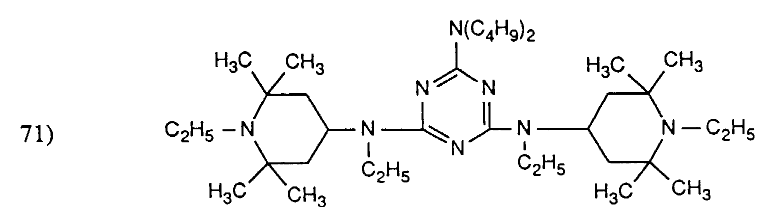

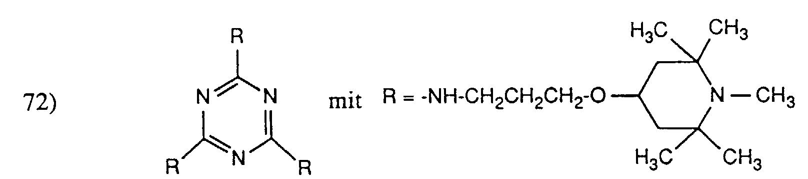

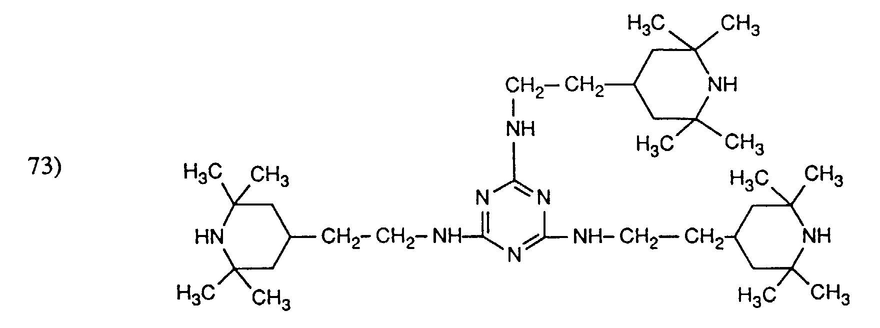

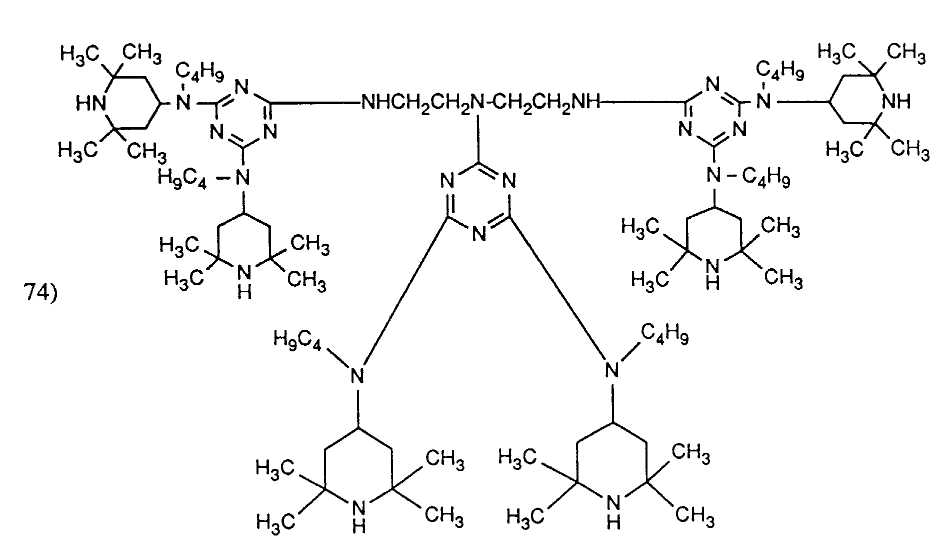

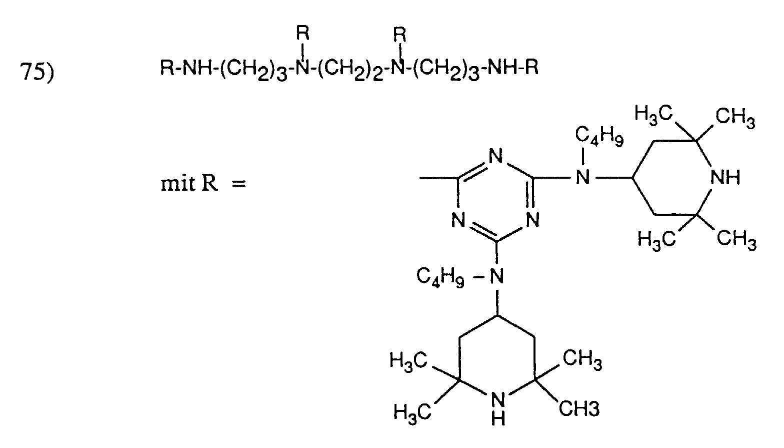

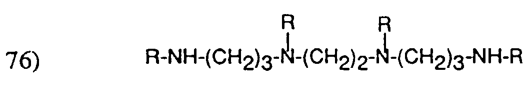

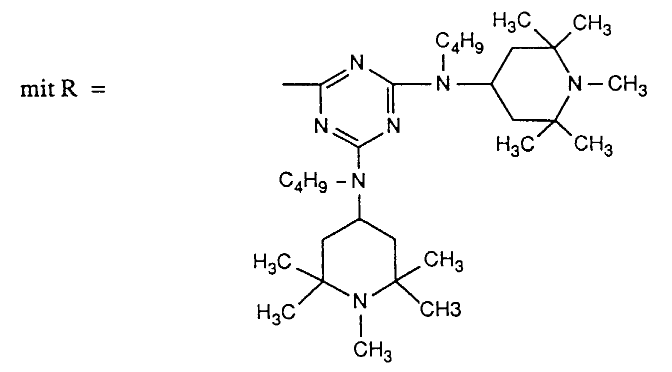

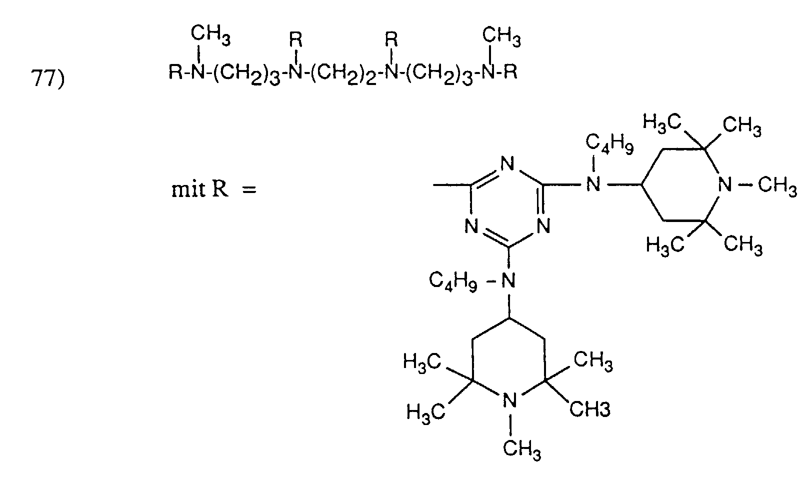

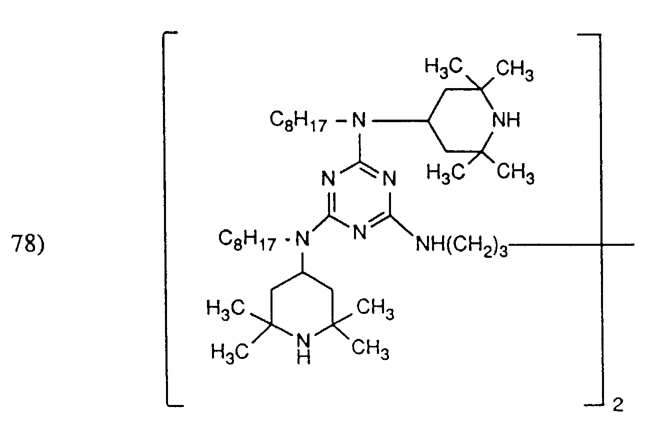

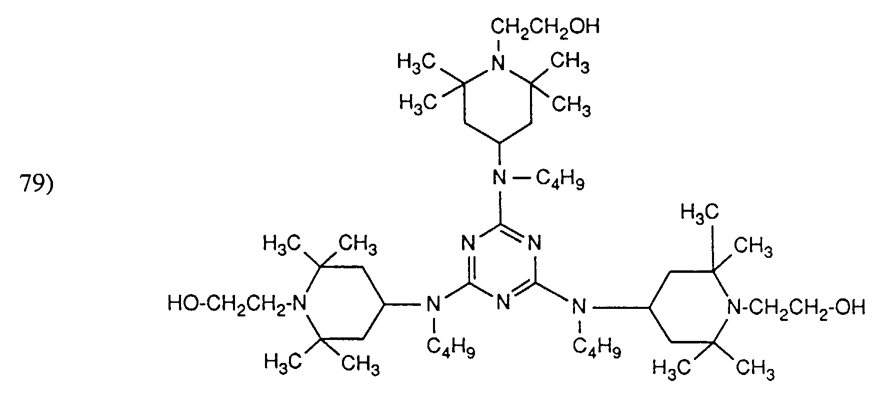

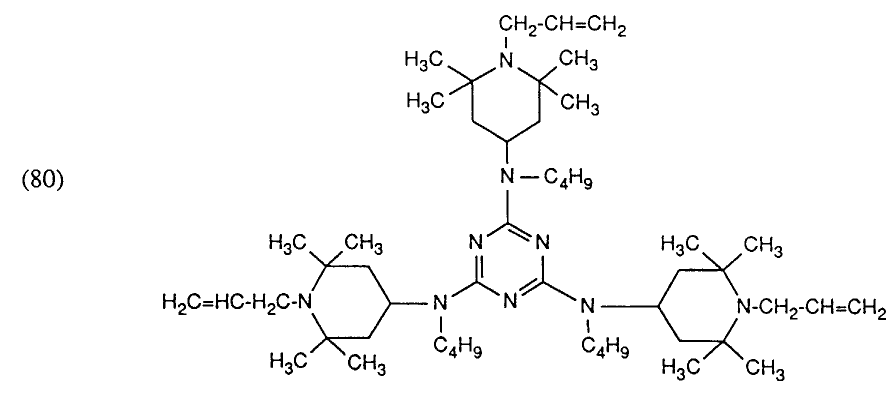

(f) Oligomere oder polymere Verbindungen, deren wiederkehrende Struktureinheit einen 2,2,6,6-Tetraalkylpiperidinrest der Formel III enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

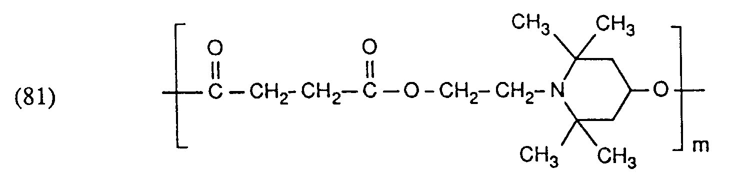

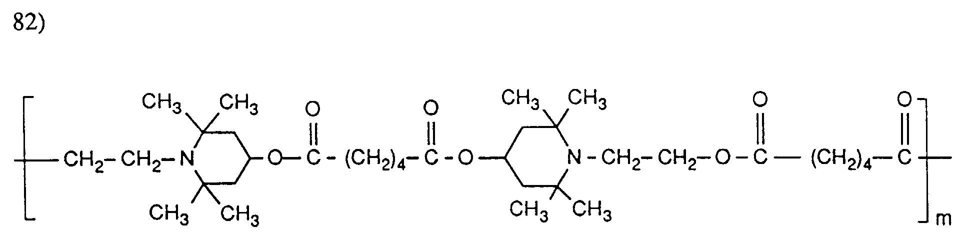

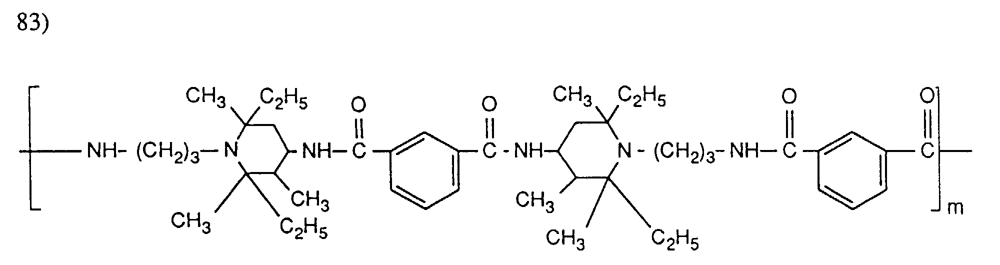

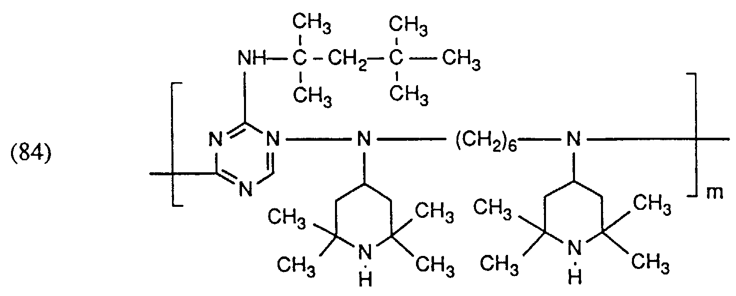

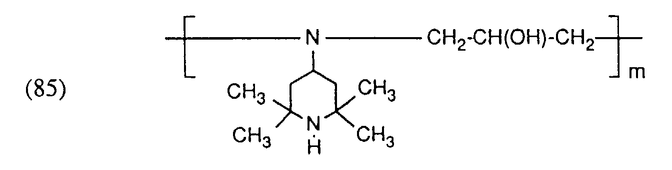

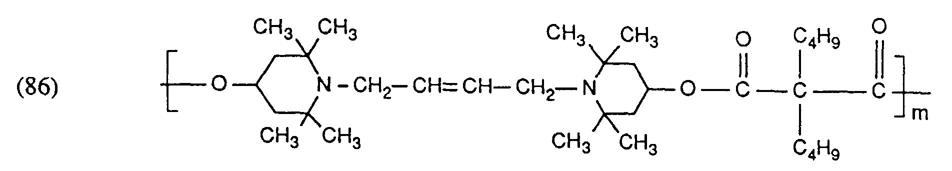

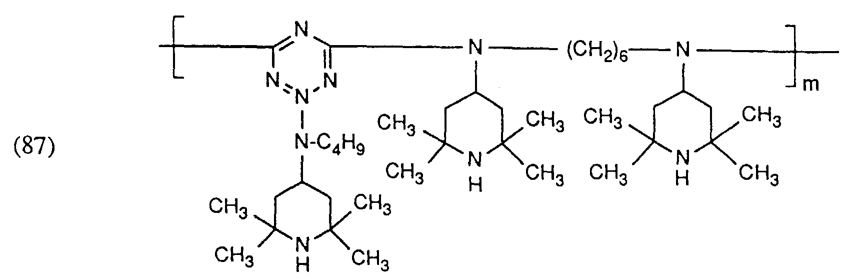

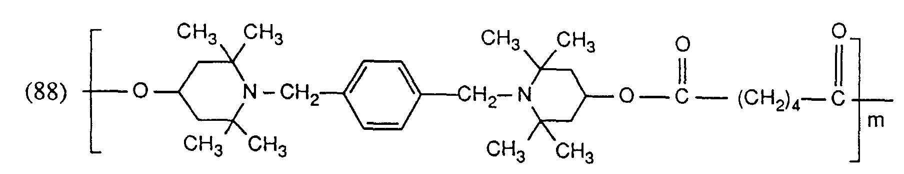

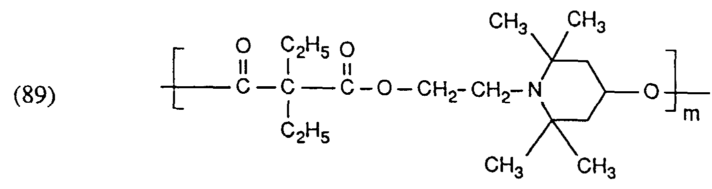

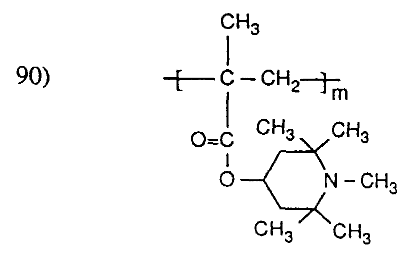

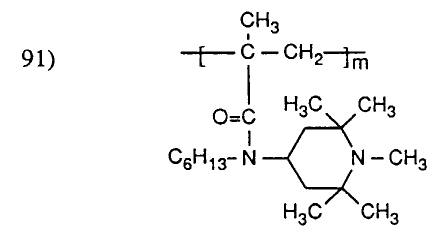

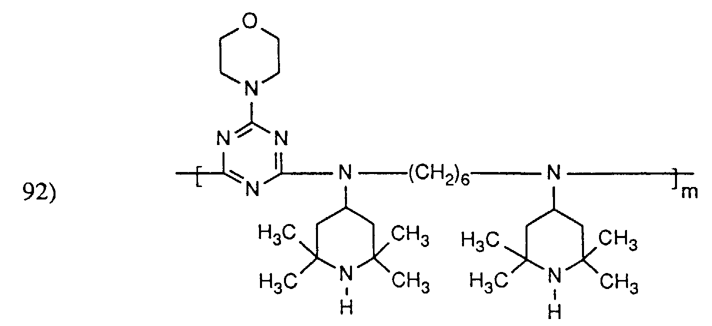

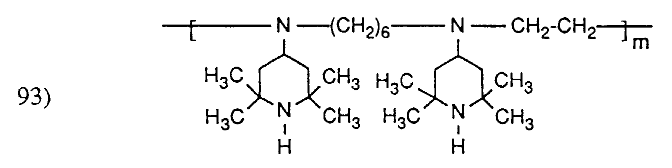

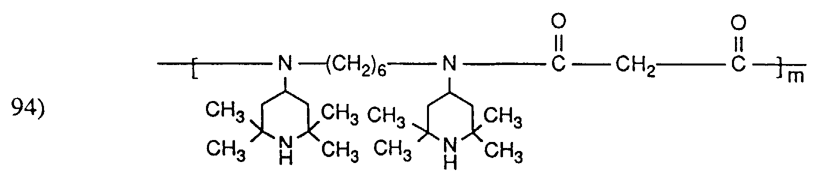

(g) Verbindungen der Formel IX 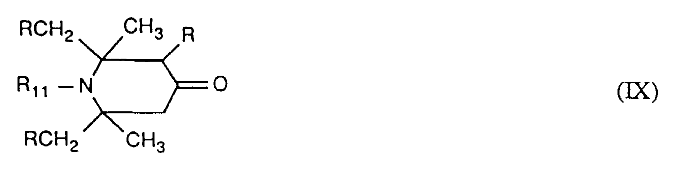 worin R und R¹¹ die unter (a) angegebene Bedeutung haben.

Bevorzugt sind Verbindungen der Formel IX, worin R Wasserstoff oder Methyl ist und R¹¹ Wasserstoff oder Methyl ist.

Beispiele für solche Verbindungen sind:
95) 2,2,6,6-Tetramethyl-4-piperidon (Triacetonamin)
96) 1,2,2,6,6-Pentamethyl-4-piperidon
97) 2,2,6,6-Tetramethyl-4-pipendon-1-oxyd
98) 2,3,6-Trimethyl-2,6-diethyl-4-piperidon

Besonders zweckmässig werden in den erfindungsgemässen Zusammensetzungen als Komponente a) cyclische sterisch gehinderte Amine eingesetzt, die keine Estergruppen enthalten und bevorzugt solche, die im Molekül mindestens einen Triazinring enthalten. Solche Amine enthalten vorzugsweise mindestens eine Gruppe der Formel III und gehören besonders bevorzugt einer der vorstehend geschilderten Typen (a) bis (g) an.

Bevorzugt sind Polymerzusammensetzungen, wie beschrieben, enthaltend als b) eine organische Zinkverbindung, wobei die Zinkverbindung ein Salz einer Carbonsäure mit 7 bis 20 C-Atomen oder ein C₇-C₂₀-Alkylphenolat darstellt.

Bei den Zinkverbindungen aus der Reihe der Carboxylate handelt es sich bevorzugt um Salze von Carbonsäuren mit 7 bis 20 C-Atomen, beispielsweise Benzoate, Alkenoate oder Alkanoate, bevorzugt Stearate, Oleate, Laurate, Palmitate, Hydroxystearate oder 2-Ethylhexanoate. Besonders bevorzugt sind Stearate, Oleate und p-tert-Butylbenzoate.

Namentlich zu erwähnen sind, als Beispiele, die Zinksalze der monovalenten Carbonsäuren, wie Essigsäure, Propionsäure, Buttersäure, Valeriansäure, Capronsäure, Enanthsäure, Caprylsäure, Neodecansäure, 2-Ethylhexansäure, Pelargonsäure, Caprinsäure, Undecansäure, Laurinsäure, Tridecansäure, Myristylsäure, Palmitinsäure, Isostearinsäure, Stearinsäure, 12-Hydroxystearinsäure, Behensäure, Montansäure, Benzoesäure, Monochlorbenzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, Cuminsäure, n-Propylbenzoesäure,

Aminobenzoesäure, N,N-Dimethylbenzoesäure, Acetoxybenzoesäure, Salicylsäure, p-tert-Octylsalicylsäure, Oleinsäure, Elaidinsäure, Sorbinsäure, Linolsäure, Linolensäure, Thioglykolsäure, Mercaptopropionsäure und Octylmercaptopropionsäure; Zinksalze der Monoester und Monoamide der divalenten Carbonsäuren, wie Oxalsäure, Malonsäure, Bernsteinsäure, Glutaminsäure, Adipinsäure, Pimelinsäure, Suberinsäure, Azelainsäure, Sebacinsäure, Phthalsäure, Isophthalsäure, Terephthalsäure, Hydroxyphthalsäure, Chlorphthalsäure, Aminophthalsäure, Maleinsäure, Fumarsäure, Citraconsäure, Mesaconsäure, Itaconsäure, Aconitrinsäure und Thiodipropionsäure; und der Di- oder Triester der tri-oder tetravalenten Carbonsäuren, wie Hemimellitsäure, Trimellitsäure, Mellophansäure, Pyromellitsäure und Mellitsäure.

Als Chelate von 1,3-Diketonen und B-Ketocarbonsäureestern sind beispielsweise Verbindungen der Formel 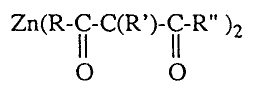 zu nennen,
wobei R, R' und R" unabhängig voneinander Alkyl mit 1 bis 18 C-Atomen, Alkenyl mit 2 bis 18 C-Atomen, Cycloalkyl mit 5 bis 12 Ring-C-Atomen, mit 1 bis 3 C₁-C₄-Alkyl substituiertes Cycloalkyl mit 5 bis 12 C-Atomen, Alkyl mit 1 bis 18 C-Atomen, das mit Cycloalkyl mit 5-12 Ring-C-Atomen substituiert ist, Phenyl-C₁-C₁₈-alkyl, C₁-C₁₈-Alkylphenyl, Phenyl, Halogenalkyl, Halogenphenyl, Alkoxyalkyl oder Alkylendioxyalkyl oder -phenyl darstellen und R' ausserdem noch für Wasserstoff stehen kann.

Beispiele für R, R', und R" sind Methyl, Ethyl, Propyl, Isopropyl, Isobutyl, n-Butyl, sec.-Butyl, tert.-Butyl, 1-Pentyl, 3-Pentyl, 1-Hexyl, 1-Heptyl, 3-Heptyl, 1-Octyl, 2,4,4-Trimethylphenyl, tert-Octyl, Nonyl, Decyl, Tridecyl, Pentadecyl, Heptadec-8-en-1-yl, n-Octadecyl, Allyl, Methallyl, 2-Hexenyl, 1-Methylcyclopentyl, Cyclohexyl, Cyclohexylpropyl, Phenyl, m-Tolyl, p-Ethylphenyl, tert.Butylphenyl, Benzyl, Phenylpropyl und Nonylbenzyl.

Beispiele für Halogenalkyl oder Halogenphenyl sind Dichlormethyl, Heptafluoropropyl, p-Bromphenyl und 3,4-Dichlorobenzyl. Alkoxyalkyl kann Ethoxymethyl, n-Butoxymethyl, 2-Methoxyethyl, 2-Methoxyphenyl und 4-n-Octoxyphenylbenzyl bedeuten. Alkylendioxyalkyl oder -phenyl kann beispielsweise 3-(Ethylendioxypropyl) oder 3,4-Methylendioxyphenyl sein.

Sinngemäss lassen sich auch alle mit obiger Aufstellung nicht umfassten bereits genannten 1,3-Diketone in Form ihrer Zink-Chelat-Form als organische Zinkverbindungen einsetzen.

Bevorzugt sind Polymerzusammensetzungen wie oben beschrieben, enthaltend als c) mindestens eine Verbindung aus der Reihe der Zeolithe.

Bevorzugt sind Polymerzusammensetzungen, wie oben beschrieben, enthaltend mindestens eine der Verbindungen der Formeln

Na₁₂Al₁₂Si₁₂O₄₈·27H₂O [Zeolith A],

Na₆Al₆Si₆O₂₄· 2NaX · 7,5 H₂O, X = OH, Cl, ClO₄, 1/2CO₃ [Sodalith]

Na₆Al₆Si₃₀O₇₂ · 24 H₂O,

Na₈Al₈Si₄₀O₉₆ · 24 H₂O,

Na₁₆Al₁₆Si₂₄O₈₀ · 16 H₂O,

Na₁₆Al₁₆Si₃₂O₉₆ · 16H₂O,

Na₅₆Al₅₆Si₁₃₆O₃₈₄· 250 H₂O, [Zeolith Y]

Na₈₆Al₈₆Si₁₀₆ · O₃₈₄· 264H₂O [Zeolith X]

oder die durch teilweisen bzw. vollständigen Austausch der Na-Atome durch Li-, K-, Mg-, Ca-, Sr-, Ba- oder Zn-Atome darstellbaren Zeolithe wie

(Na,K)₁₀Al₁₀Si₂₂O₆₄ · 20 H₂O.

Ca_{4,5}Na₃[(AlO₂)₁₂(SiO₂)₁₂] · 30 H₂O

K₉Na₃[(AlO₂)₁₂(SiO₂)₁₂] · 27 H₂O

Die angeführten Zeolithe können auch wasserärmer bzw. wasserfrei sein.

Die Polymerzusammensetzungen können auch weitere organische oder anorganische Ca- und darüberhinaus Ba- und Mg-Verbindungen enthalten. Bevorzugt sind Calcium-Verbindungen. Zweckmässig wird mindestens eine organische oder anorganische Ca-, Ba- und/oder Mg-Verbindung aus der Reihe der aliphatischen C₁-C₂₂-Carboxylate, der olefinischen C₂-C₂₂-Carboxylate, der aliphatischen C₂-C₂₂-Carboxylate, die mit wenigstens einer OH-Gruppe substituiert sind, der cyclischen und bicyclischen Carboxylate mit 5-22 C-Atomen, der aromatischen C₆-C₂₂- Carboxylate, der mit wenigstens einer OH-substituierten aromatischen C₆-C₂₂-Carboxylate, der C₁-C₁₆-alkylsubstituierten Phenylcarboxylate, der Phenyl-C₁-C₁₆-alkylcarboxylate, der C₆-C₁₈-Phenolate, der C₅-C₂₆-Chelate von 1,3-Diketonen oder β-Ketocarbonsäureestern, der Dehydracetsäure und deren Derivaten, der Carbonate, Sulfate, Oxide, Hydroxide, basischen Oxide und Misch-Oxide, der Mercaptide auf der Basis von Mercaptocarbonsäureestern, der Glycinate, Phosphate, Phosphite, Phosphonite, Phosphonate, der Partialester von Phosphonaten, der Sulfonate und Sulfinate, wobei die Carbonate, Sulfate und Phosphite auch in überbasischen Formen angewendet werden können, angewendet.

Beispiele und Bevorzugungen für die organischen und anorganischen Ca-, und darüber hinaus Ba- und Mg-Verbindungen sind sinngemäss aus den Beispielen und Bevorzugungen, die zu den Zinkverbindungen angegeben sind, abzuleiten. Dabei soll jeweils anstelle des Zinks eines der Metalle der Reihe Calcium, Barium oder Magnesium gelesen werden.

Als chlorhaltige Polymere können beispielsweise aufgezählt werden: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfasst die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Zweckmässig sind Polymerzusammensetzungen, wie vorstehend beschrieben, enthaltend, bezogen auf 100 Gew.-Teile Zusammensetzung,
a) 0,01 bis 1,5 Gew.-Teile an cyclischen oder nicht-cyclischen sterisch gehinderten Aminen,
b) 0,01 bis 2 Gew.-Teile an organischen oder anorganischen Zinkverbindungen und
c) 0,1 bis 3 Gew.-Teile an Verbindungen aus der Reihe der kristallinen Alkali-/Erdalkali-alumosilikate.

Bevorzugte Mengenbereiche für die sterisch gehinderten Amine in der Polymerzusammensetzung sind 0,05 bis 1,0 Gew.-Teile, bezogen auf 100 Gew.-Teile Zusammensetzung. Besonders bevorzugt sind 0,1 bis 0,5 Gew.-Teile.

Bevorzugte Mengenbereiche für die Zinkverbindungen in der Polymerzusammensetzung sind 0,05 bis 1 Gew.-Teile, bezogen auf 100 Gew.-Teile Zusammensetzung.

Bevorzugte Mengenbereiche für die kristallinen Alkali-/Erdalkali-alumosilikate in der Polymerzusammensetzung sind 0,3 bis 2 Gew.-Teile, bezogen auf 100 Gew.-Teile Zusammensetzung. Besonders bevorzugt sind 0,4 bis 1 Gew.-Teil.

Das chlorhaltige Polymer kann einen Weichmacher enthalten, wobei chlorhaltige Polymere, die keinen Weichmacher enthalten, bevorzugt sind.

Als organische Weichmacher kommen beispielsweise solche aus den folgenden Gruppen in Betracht:
A) Phthalate (Phthalsäureester)
   Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇C₉- und C₉-C₁₁-Alkylphthalate aus überwiegend linearen Alkoholen, C₆-C₁₀-n-Alkylphthalate und C₈-C₁₀-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexylphthalat (DOP).
B) Ester aliphatischer Dicarbonsäuren, insbesondere Ester von Adipin-, Azelain- und Sebazinsäure
   Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.
C) Trimellithsäureester,
   beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen.
D) Polymerweichmacher
   Eine Definition dieser Weichmacher und Beispiele für solche sind im "Plastics Additives Handbook", Herausgeber H. Gächter und H. Müller, Hanser Publishers, 1985, Seite 284, Kapitel 5.7.10 sowie in "PVC Technology", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie C₇-C₉-Alkanol- und C₉-C₁₁-Alkanolgemische. Besonders vorteilhaft sind Polyesterweichmacher aus den genannten Dicarbonsäuren und monofunktionellen Alkoholen.
E) Phosphorsäureester
   Eine Definition dieser Ester ist im vorstehend genannten "Plastics Additives Handbook" auf Seite 271, Kapitel 5.7.2 zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt ist Tri-2-ethylhexyl-phosphat.
F) Chlorierte Kohlenwasserstoffe (Paraffine)
G) Kohlenwasserstoffe
H) Monoester, z.B. Butyloleat, Phenoxyethyloleat, Tetrahydrofurfuryloleat und Alkylsulfonsäureester.
I) Glycolester, z.B. Diglykolbenzoate.

Definitionen und Beispiele für Weichmacher der Gruppen F) bis I) sind den folgenden Handbüchern zu entnehmen:

"Plastics Additives Handbook", Herausgeber H. Gächter und H. Müller, Hanser Publishers, 1985, Seite 284, Kapitel 5.7.11 (Gruppe F)), und Kapitel 5.7.13 (Gruppe G)).

"PVC Technology", Herausgeber W.V. Titow, 4th. Ed., Elsevier Publishers, 1984, Seiten 171-173, Kapitel 6.10.2 (Gruppe F)), Seite 174, Kapitel 6.10.5 (Gruppe G)), Seite 173, Kapitel 6.10.3 (Gruppe H)) und Seiten 173-174, Kapitel 6.10.4 (Gruppe I)).

Besonders bevorzugt sind Weichmacher aus den Gruppen A) bis E), insbesondere A) bis C), vor allem die in diesen Gruppen als bevorzugt herausgestellten Weichmacher. Besonders günstig ist Di-2-ethylhexylphthalat (DOP).

Die Weichmacher können in einer Menge von beispielsweise 15 bis 70, zweckmässig 15 bis 60 und insbesondere 20 bis 50 Gew.-Teilen, bezogen auf 100 Gew.-Teile Polymerzusammensetzung, angewendet werden.

Die Polymerzusammensetzungen nach vorliegender Erfindung können auch weitere Stabilisatoren enthalten, so die vorstehend genannte Komponente d) 1,3-Diketone, die zweckmässig in Mengen von 0,05 bis 5, vorzugsweise in Mengen von 0,10 bis 1 Gew.-Teil und insbesondere in Mengen von 0,5 bis 1 Gew.-Teil, jeweils bezogen auf 100 Gew.-Teile Zusammensetzung, angewendet werden kann.

Ein anderer Stabilisator, der ebenfalls Anwendung finden kann, ist die vorstehend beschriebene Komponente e) - die organischen oder anorganischen Calciumverbindungen -, die zweckmässig in Mengen von 0,05 bis 5 Gew.-Teilen, vorzugsweise in Mengen von 0,1 bis 1 Gew.-Teil und insbesondere in Mengen von 0,5 bis 1 Gew.-Teil, jeweils bezogen auf 100 Gew.-Teile Zusammensetzung, angewendet werden können.

Finden weitere Stabilisatoren aus der Reihe der organischen oder anorganischen Ca-, Ba-, Mg- oder Pb-Verbindungen, wie oben erwähnt, Anwendung, so können beispielsweise 0 bis 5 Gew.-Teile, bezogen auf die Zusammensetzung, eingesetzt werden. Zweckmässig sind 0,05 bis 5 Gew.-Teile, bevorzugt 0,1 bis 1 Gew.-Teile.

Die erfindungsgemässen Zusammensetzungen können auch weitere, für chlorhaltige Thermoplasten übliche Stabilisatoren enthalten. So enthalten sie beispielsweise 0-3 Teile, bezogen auf die Zusammensetzung, insbesondere 0-1,5, vor allem 0-1 Teile eines oder mehrerer Phosphite. Solche Phosphite können etwa in einer Menge von 0,01-3, insbesondere 0,01-1,5, z.B. 0,01-1, bevorzugt 0,1-0,6, z.B. 0,2-0,5 Teilen enthalten sein. Beispiele für derartige Phosphite sind etwa solche der Formeln 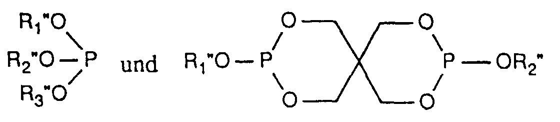 worin R¹'', R²'' und R³'' gleich oder verschieden sind und C₆-C₁₈-Alkyl, C₆-C₁₈-Alkenyl, einen substituierten oder unsubstituierten Phenylrest oder C₅-C₇-Cycloalkyl bedeuten.

Bedeuten R¹'', R²'' und R³'' C₆-C₁₈-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten R^{1''}, R^{2''} und R^{3''} beispielsweise Tolyl, Ethylphenyl, Xylyl, Cumyl, Cymyl, Kresyl, 4-Methoxyphenyl, 2,4-Di-methoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert.-butylphenyl)-di-dodecylphosphit, (2,6-Di-tert.-butylphenyl)-di-dodecylphosphit und die Dialkyl-und Diaryl-pentaerythrit-diphosphite, wie Distearylpentaerythrit-diphosphit.

Bevorzugte organische Phosphite sind Distearyl-pentaerythrit-diphosphit, Trisnonylphenylphosphit und Phenyl-didecyl-phosphit.

Ferner können in den erfindungsgemässen Zusammensetzungen weitere bekannte Costabilisatoren enthalten sein, beispielsweise 0-2, insbesondere 0-1,5 Teile, bezogen auf die Zusammensetzung. Sie sind dann vorzugsweise in einer Menge von 0,01-2, insbesondere 0,05-1,5, z.B. 0,1-1, vor allem 0,1-0,5 Teilen vorhanden. Als derartige Costabilisatoren seien Aminocrotonsäureester, Dehydracetsäure, 2,4-Dihydroxybenzophenon, 2,4-Dihydroxy-4'-tert.-butylbenzophenon Dihydropyridin-Derivate und Pyrrolderivate genannt.

Als Aminocrotonsäureester kommen insbesondere die Ester mit einwertigen geradkettigen C₈-C₂₀-, insbesondere C₁₂-C₁₈-Alkoholen und/oder mit 1,3- bzw. 1,4-Butandiol und/oder 1,2-Dipropylenglykol und/oder Thiodiethylenglykol in Betracht.

Als Pyrrol-Costabilisatoren sind jene besonders zu erwähnen, die in der EP-A 22 087 und der GB-A 2 078 761 beschrieben sind, z.B. der dort angegebenen Formel I, vorzugsweise jene Pyrrolderivate, die in den Ansprüchen 2-9 der EP-A 22 087 definiert sind. Als Beispiel sei 2-Methyl-3-cyclohexyloxycarbonyl-4-phenyl-1H-pyrrol genannt.

Ferner können die erfindungsgemässen Zusammensetzungen neben den vorstehend genannten fakultativen Costabilisatoren oder an deren Stelle noch weitere fakultative Bestandteile enthalten, z.B. organische Antimonverbindungen, wie Antimon-tris-[isooctyl-thioglykolat] (Isooctyl = 2-Ethylhexyl).

Andere Stabilisatoren, die in den erfindungsgemässen Zusammensetzungen angewendet werden können, sind Polyole. Die anzuwendenden Mengen sind beispielsweise bis zu 3 Gew.-Teile, bezogen auf 100 Gew.-Teile Zusammensetzung, zweckmässig bis zu 2 Gew.-Teilen und vorzugsweise 0,01 bis 1 Gew.-Teil. Typische Beispiele von Polyolen sind Pentaerythrit, Dipentaerythrit, Trimethylolpropan, Ditrimethylolpropan, Tris-(2-hydroxyethyl)isocyanurat (THEIC), wobei letzteres bevorzugt ist, Sorbit, Mannit und Inosit.

Ferner können die erfindungsgemässen Zusammensetzungen übliche Antioxidantien, Lichtstabilisatoren und UV-Absorber enthalten. Beispiele dafür sind:
1. Antioxidantien
   1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
   1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Di-phenyl-4-octadecyloxyphenol.
   1.3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
   1.4. Alkyliden-Bisphenole, z.B. 2,2'-Methylen-bis-(6-tertbutyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tertbutyl-4-methyl-phenyl]-terephthalat.
   1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tertbutyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocya nurat, 3,5-Di-tert.butyl-4-hydroxybenzyl-phosphonsäure-dioctadecyles ter, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.
   1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.
   1.7. Ester der β-(3.5-Di-tert.butyl-4-hydroxyphenyl)-propionsäure mit ein- oder mehrwertigen Alkoholen, wie z.B. mit Methanol, Octa- decanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.
   1.8. Ester der β-(-5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
   1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
   1.10. Amide der β-(3,5-Di-tert.butvl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.
2. UV-Absorber und Lichtschutzmittel
   2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-,3'-sec.Butyl-5'-tert.butyl, 4'-Octoxy-, 3',5'-Di-tert.amyl-, 3',5'-Bis-(α,α-dimethylbenzyl)-Derivat.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester , 3,5-Di-tert.butyl-4-hydroxybenzoesäurehexadecylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremelylester bzw.-butylester, α-Carbomethoxy-p-methoxyzimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Oxalsäurediamide, wie z.B. 4,4'-Di-octyloxy-oxanilid, 2,2'-Di-octyloxy-5,5'-di-tert.butyl-oxanilid,2,2'-Di-dodecyloxy-5,5'di-tert.butyloxanilid, 2-Ethoxy-2'ethyl-oxanilid, N,N'-Bis-(3-dimethylaminopropyl)oxalamid, 2-Ethoxy-5-tert.butyl-2'-ethyloxanilid und dessen Gemisch mit 2-Ethoxy-2'ethyl-5,4'-di-tert.butyl-oxanilid, Gemische von o-und p-Methoxy- sowie von o- und p-Ethoxy-di-substituierten Oxaniliden.
   2.7. 2-(2-Hydroxyphenyl)-1,3,5-triazine, wie z.B. 2,4,6-Tris(2-hydroxy-4-octyloxyphenyl)- 1 ,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.

   Je nach Verwendungszweck können in die erfindungsgemässen Zusammensetzungen ausserdem noch weitere übliche Zusätze eingearbeitet werden, wie z.B.
3. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylpheny1)4,4'-biphenylen-diphosphonit, 3,9-Bis-(2,4-di-tert.butylphenoxy)-2,4,8,8,10-tetraoxa-3,9-diphosphaspiro[5.5]undecan.
4. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
5. Basische Co-Stabilisatoren, wie z.B. Harnstoff-Derivate, Thioharnstoff-Derivate, Alkali- und Erdalkalisalze höherer Fettsäuren, beispielsweise Mg-Stearat, Na-Ricinoleat, K-Palmitat, Trishydroxyethylisocyanurat.
6. Füllstoffe und Verstärkungsmittel, wie z.B. Calciumcarbonat, Silikate, Glasfasern, Talk, Kaolin, Glimmer, Bariumsulfat, Metalloxide und -hydroxide, Russ, Graphit.
7. Sonstige Zusätze, wie z.B. Weichmacher, Gleitmittel, Emulgatoren, Pigmente, Optische Aufheller, Flammschutzmittel, Antistatika, Treibmittel.

Beispiele weiterer besonders wertvoller Costabilisatoren, die einzeln oder zu mehreren - neben den oder an Stelle der - vorstehend genannten fakultativen Costabilisatoren angewendet werden können, wobei die Einsatzmenge beispielsweise für jeden Costabilisator 0 bis 2,0 Gew.-Teile, zweckmässig 0,05-1,0 Gew.-Teile und insbesondere 0,1 bis 0,5 Gew.-Teile, jeweils bezogen auf 100 Gew.-Teile Zusammensetzung, beträgt, sind nachfolgend beispielhaft aufgezählt.

Stabilisatorgemische aus einem Salz einer organischen Säure und einem Polyol, wobei das Polyol ein synergistisches Gemisch aus Ditrimethylolpropan in Kombination mit einem unterschiedlichen Polyol mit 5 bis 15 Kohlenstoffatomen und 2 bis 10 Hydroxylgruppen und einem Schmelzpunkt von nicht unter 100°C darstellt. Eine umfassende Darstellung, Beispiele und Bevorzugungen sind der Europäischen Patentschrift 0 058 447 zu entnehmen.

Stabilisatorgemische im wesentlichen bestehend aus Stickstoff-freien Ketosäuren mit mindestens 8-C-Atomen und einem Metallsalz einer organischen Stickstoff-freien Monocarboxylsäure mit 6 bis 24 C-Atomen oder den Salzen der Ketoessigsäure mit 4 bis 33 C-Atomen und einem mit einem Kohlenwasserstoff substituierten Phenol. Eine ausführliche Beschreibung derartiger Stabilisatorgemische, Beispiele und Bevorzugungen sind der GB 1 099 731 zu entnehmen.

Stabilisatorgemische enthaltend
0,7-2 Teile Thiodiethylenglykol-bis-acetoacetat der Formel

   (H₃CCOCH₂COOCH₂CH₂)₂S,
0-0,5 Teile mindestens eines Ca-, Ba- oder/und Mg-Salzes einer aliphatischen C₈-C₂₄-Monocarbonsäure oder -Hydroxymonocarbonsäure oder der Benzoesäure oder tert.-Butylbenzoesäure
0,01-0,2 Teile mindestens eines Zn-Salzes einer aliphatischen C₈-C₂₄-Monocarbonsäure oder -Hydroxymonocarbonsäure oder der Benzoesäure oder tert.-Butylbenzoesäure, die ferner mit
3-10 Teile von epoxidierten ungesättigten Fettsäureestern und
10-70 Teile mindestens eines organischen Weichmachers gemischt sind. Eine ausführliche Beschreibung, Beispiele und Bevorzugungen sind der GB 2 212 808 zu entnehmen.

Stabilisatorgemische enthaltend
0,7-2 Teile Thiodiethylenglykol-bis-acetoacetat der Formel

   (H₃CCOCH₂COOCH₂CH₂)₂S,
0-0,5 Teile eines Ca-, Ba- oder/und Mg-Salzes einer aliphatischen C₈-C₂₄-Monocarbonsäure oder -Hydroxymonocarbonsäure oder der Benzoesäure oder tert.-Butylbenzoesäure
0,01-0,2 Teile eines Zn-Salzes einer aliphatischen C₈-C₂₄-Monocarbonsäure oder -Hydroxymonocarbonsäure oder der Benzoesäure oder tert.-Butylbenzoesäure, und darüberhinaus
3-10 Teile von epoxidierten ungesättigten Fettsäureestern. Weitere Erläuterungen, Beispiele und Bevorzugungen sind der GB 2 192 004 zu entnehmen.

Verbindungen der Formel a und b 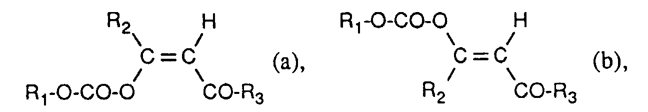 worin R¹ C₁C₂₂-Alkyl, Phenyl, durch ein oder zwei C₁-C₉-Alkyl substituiertes Phenyl, C₅-C₇-Cycloalkyl oder eine Gruppe der Formeln A oder B ist 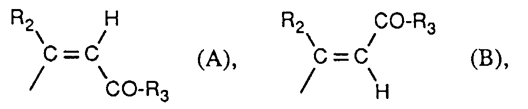 oder R¹ eine Gruppe der Formeln ca oder cb ist 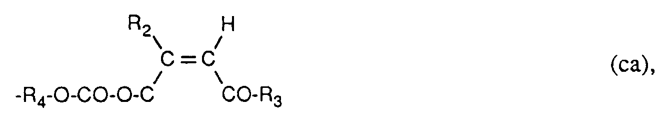 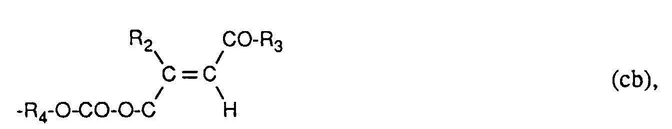 R² und R³ unabhängig voneinander C₁-C₂₀-Alkyl, Phenyl, durch ein oder zwei C₁-C₉-Alkyl substituiertes Phenyl oder C₅-C₇-Cycloalkyl sind und R⁴ C₂-C₁₂-Alkylen ist. Weiterführende Erläuterungen, Beispiele und Bevorzugungen sind der EP 224 438 zu entnehmen.

Weitere Stabilisatoren sind Triazole der Formel 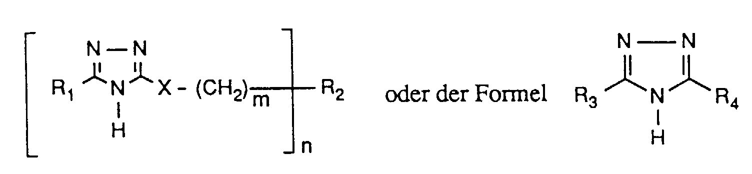 worin R₁ Wasserstoff, Hydroxy, C₁-C₆-Alkoxy, Carboxy, C₂-C₆-Alkoxycarbonyl, Merkapto, C₁-C₆-Alkylthio oder eine Gruppe -S-CH₂-COOH oder -S-CH₂-COO-Alkyl(C₁-C₆) bedeutet, X Thio, Methylen oder die Gruppe -COO- oder -S-CH₂-COO-, jeweils durch das Estersauerstoffatom an das Alkyl gebunden, ist, m eine ganze Zahl von 1 bis 20 ist, n 1 oder 2 ist, R₂, falls einwertig, Wasserstoff, Hydroxy oder Merkapto bedeutet und, falls zweiwertig eine direkte Bindung, Imino, C₁-C₆-Alkylimino, Oxy, Thio oder Methylen ist, R₃ Wasserstoff, Amino, Merkapto oder C₁-C₁₂-Alkylthio ist und, falls R₃ Wasserstoff bedeutet, R₄ Wasserstoff, -COOR₅, worin R₅ Wasserstoff, C₁-C₈-Alkyl oder -CH₂-COO-Alkyl(C₁-C₈) ist, oder -S-R₆, wobei R₆ Wasserstoff, C₁-C₁₂-Alkyl, -CH₂-COO-Alkyl(C₁-C₈) oder C₁-C₁₂-Alkylthio ist oder 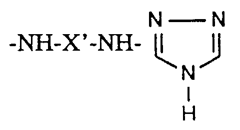 ist, worin X' für die Gruppe -CO-NH-Alkylen-NH-CO-, -CO-Alkylen-S-Alkylen-CO mit jeweils 1-12 C-Atomen in der Alkylenkette oder für (C₁-C₁₂)-Alkylen steht, falls R₃ NH₂ ist, R₄ C₁-C₄-Alkyl, Merkapto, C₁-C₄-Alkylthio oder 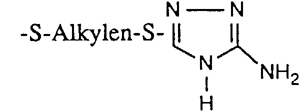 mit 1-12 C-Atomen in der Alkylenkette bedeutet, falls R₃ Merkapto ist, R₄ gegebenenfalls substituiertes Phenyl bedeutet, und falls R₃ C₁-C₁₂-Alkylthio ist, R₄ für C₁-C₄ -Alkyl, C₁-C₁₂-Alkylthio oder für gegebenenfalls substituiertes Phenyl steht.

Solche Stabilisatoren, weitere Ausführungsformen , Beispiele und Bevorzugungen sind aus der DE 30 48 659 ersichtlich.

Stabilisatorgemische bestehend aus einem Thioäther der Formel 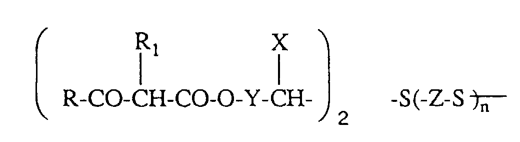 worin
- n: die Zahlen Null oder 1 bedeutet,
- R: C₁-C₁₈-Alkyl, C₅-C₈-Cycloalkyl, gegebenenfalls mit C₁-C₄-Alkyl substituiertes C₆-C₁₀-Aryl und
- R: Wasserstoff oder C₁-C₄-Alkyl sind,
- X: als wiederholt vorkommendes Symbol gleich oder verschieden Wasserstoff oder eine Gruppe der Formel 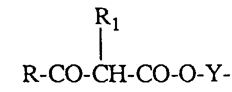 bedeutet,
Y als wiederholt vorkommendes Symbol gleich oder verschieden C₁-C₆-Alkylen oder eine Gruppe der Formel 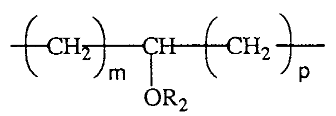 ist, wobei die (̵CH₂ 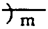 Gruppe an das Sauerstoffatom gebunden ist und worin R₂ Wasserstoff oder eine Gruppe der Formel 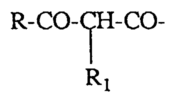 bedeutet, n die Zahlen 1 bis 4 und p die Zahlen Null bis 3 sein können, Z C₁-C₆-Alkylen oder eine Gruppe der Formel 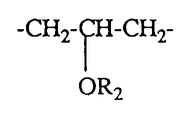 ist, und
b) einem ein Metall aus der Gruppe Zink, Calcium, Barium, Magnesium oder Antimon oder ferner auch Zink kombiniert mit mindestens einem der vorgenannten Metalle enthaltenden Stabilisator.

Weitere Ausführungen dazu, Beispiele und Bevorzugungen sind der EP 19 576 zu entnehmen.

Neben den genannten Stabilisatoren und Costabilisatoren nach dieser Erfindung können auch Epoxyverbindungen, wie 1,2-Epoxide und Oxirane, in Mengen von beispielsweise bis zu 10 Gew.-Teilen, bezogen auf 100 Gew.-Teile Zusammensetzung, zweckmässig bis zu 5 Gew.-Teilen und vorzugsweise von 0,01 bis zu 2 Gew.-Teilen, angewendet werden. Beispiele dafür sind epoxidiertes Polybutadien, epoxidiertes Sojabohnenöl, epoxidiertes Leinsamenöl, epoxidiertes Fischöl, epoxidierter Talg, Methylbutyl- oder 2-Ethylhexylepoxystearat, Tris(epoxypropyl)isocyanurat, epoxidiertes Ricinusöl, epoxidiertes Sonnenblumenöl, 3-(2-Phenoxy)-1,2-epoxypropan, Bisphenol-A-polyglycidylether, Vinylcyclohexendiepoxyd, Dicyclopentadiendiepoxyd und 3,4-Epoxycyclohexylmethyl-3,4-epoxycyclohexancarboxylat.

Die erfindungsgemässen Zusammensetzungen können auf an sich bekannte Weise hergestellt werden. In der Regel wird das Stabilisatorsystem in das Polymer eingearbeitet, wozu sich an sich bekannte Vorrichtungen, wie Kalander, Mischer, Kneter und dergleichen, anbieten.

Die nach vorliegender Erfindung stabilisierten Zusammensetzungen können auf bekannte Weisen in die gewünschte Form gebracht werden. Solche Verfahren sind beispielsweise Mahlen, Kalandrieren, Extrudieren, Spritzgiessen, Sintern oder Spinnen, ferner Extrusions-Blasen oder eine Verarbeitung nach dem Plastisol-Verfahren. Die Zusammensetzungen können auch zu Schaumstoffen verarbeitet werden.

Bevorzugte stabilisierte chlorhaltige Polymerzusammensetzungen sind nicht weichgemachte, resp. weichmacherfreie oder im wesentlichen weichmacherfreie Zusammensetzungen.

Die erfindungsgemässen Zusammensetzungen eignen sich insbesondere, in Form von Hart-Rezepturen, für Hohlkörper (Flaschen), Verpackungsfolien (Tiefziehfolien), Blasfolien, Crash pad-Folien (Automobile), Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).

Andere Zusammensetzungen, in Form von Weich-Rezepturen sind für Drahtummantelungen, Kabelisolierungen, Dekorationsfolien, Dachfolien, Schaumstoffe, Agrarfolien, Schläuche, Dichtungsprofile, Bürofolien und Folien für Traglufthallen geeignet.

Beispiele für die Anwendung der erfindungsgemässen Zusammensetzungen als Plastisole sind Kunstleder, Fussböden, Textilbeschichtungen, Tapeten, Coil-Coatings und Unterbodenschutz für Kraftfahrzeuge.

Beispiele für Sinter-PVC-Anwendungen der erfindungsgemässen Zusammensetzungen sind Slush, Slush Mould und Coil-Coatings.

Bevorzugt wird die Verwendung der oben beschriebenen Polymerzusammensetzungen als Hartprofile für Aussenanwendungen und als Hartfolien. Weitere bevorzugte Verwendungen der oben beschriebenen Polymerzusammensetzungen sind "slush mold" oder "crash pads".

Die nachfolgenden Beispiele erläutern die Erfindung näher. Alle Angaben in Teilen und Prozenten beziehen sich auf das Gewicht, sofern nicht anders angegeben.

Beispiel 1: Verschiedene PVC-Zusammensetzungen werden durch Vermischen der einzelnen Komponenten gemäss nachfolgender Tabelle hergestellt (Mengenangaben in Gew.-Teilen).

**Tabelle 1:**

| | | | | |
|---|---|---|---|---|
| Solvic 264 GA | 100 | 100 | 100 | 100 |
| (S-PVC; K-Wert 64) | | | | |
| Amin 1 | 1,2 | 1,2 | 0,3 | 0,3 |
| Zn-Neodecanat | 1,4 | 1,4 | 0,5 | 0,5 |
| Wessalith P | -- | 0,5 | -- | 2,5 |
| (NaA-Zeolith) | | | | |
| Induktionszeit im DHC-Test* [min] | 54 | 62 | 23 | 43 |

| | | | | |
|---|---|---|---|---|
| *DHC-Test: Dehydrochlorierungs-Test in Anlehnung an DIN 53 381, Bl. 3 [Induktionszeit: Zeit bis Anstieg der Dehydrochlorierungskurve] | | | | |

Es handelt sich um Rezepturen für Hart-PVC-Profile für Aussenanwendungen. Die Zusammensetzungen werden einem Hitzetest ausgesetzt, um die Stabilisatorwirkung im PVC zu prüfen.

Das in dem Beispiel erwähnte sterisch gehinderte Amin hat, entsprechend der jeweiligen Bezugsnunummer, die nachfolgende Bedeutung:

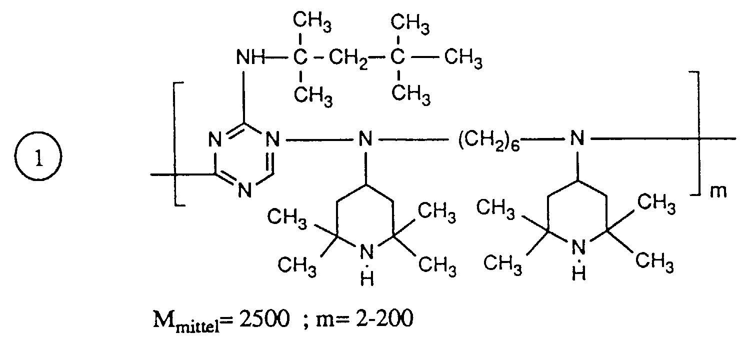

## Patentansprüche

1. Stabilisierte chlorhaltige Polymerzusammensetzung, enthaltend ein chlorhaltiges Polymer und ein Stabilisatorgemisch, enthaltend: a) mindestens ein cyclisches oder nicht cyclisches sterisch gehindertes Amin,
b) mindestens eine organische Zinkverbindung und/oder anorganische Zinkverbindung der Reihe der Carbonate, Chloride, Sulfate, Oxide, Hydroxide, der basischen Oxide und Mischoxide, und
c) mindestens ein Verbindung aus der Reihe der kristallinen Alkali-/Erdalkali-alumosilikate.

2. Polymerzusammensetzung nach Anspruch 1, enthaltend d) mindestens ein 1,3-Diketon.

3. Polymerzusammensetzung nach Anspruch 1, enthaltend e) mindestens eine organische oder anorganische Calcium-Verbindung.

4. Polymerzusammensetzung nach Anspruch 1, enthaltend als a) mindestens ein cyclisches sterisch gehindertes Amin, insbesondere eine Verbindung aus der Reihe der Derivate von Polyalkylpiperidinen, die mindestens eine Gruppe der Formel III, 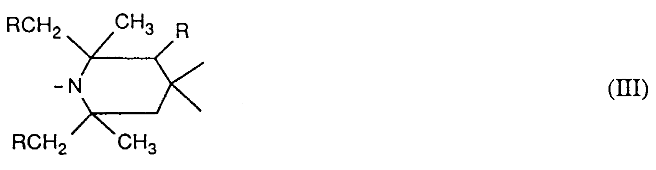 worin R Wasserstoff oder Methyl ist, enthält.

5. Polymerzusammensetzung nach Anspruch 4, worin der Polyalkylpiperidinrest der Formel III in 4-Stellung mit einem oder 2 polaren Substituenten oder einem polaren Spiro-Ringsystem substituiert ist.

6. Polymerzusammensetzung nach Anspruch 1, enthaltend als b) mindestens eine organische Zinkverbindung aus der Reihe der aliphatischen gesättigten C₂-C₂₂-Carboxylate, der aliphatischen olefinischen C₃-C₂₂-Carboxylate, der aliphatischen C₂-C₂₂-Carboxylate, die mit wenigstens einer OH-Gruppe substituiert sind, der cyclischen und bicyclischen Carboxylate mit 5-22 C-Atomen, der aromatischen C₇-C₂₂-Carboxylate, der mit wenigstens einer OH-Gruppe substituierten aromatischen C₇-C₂₂-Carboxylate, der C₁-C₁₆-alkylsubstituierten Phenylcarboxylate, der Phenyl-C₁-C₁₆-alkylcarboxylate, der C₆-C₁₈-Phenolate, der C₅-C₂₆-Chelate von 1,3-Diketonen oder β-Ketocarbonsäureestern oder Dehydracetsäurederivaten sowie der Mercaptide auf der Basis von Mercaptocarbonsäureestern und der Glycinate.

7. Polymerzusammensetzung nach Anspruch 1, enthaltend als c) mindestens eine Verbindung aus der Reihe der NaA-Zeolithe.

8. Polymerzusammensetzung gemäss Anspruch 7, enthaltend als c) Wessalith P.

9. Polymerzusammensetzung gemäss Anspruch 2, enthaltend als d) mindestens ein 1,3-Diketon der allgemeinen Formel II oder IIa, 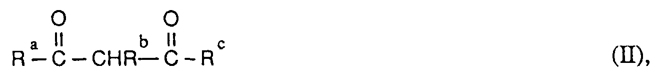 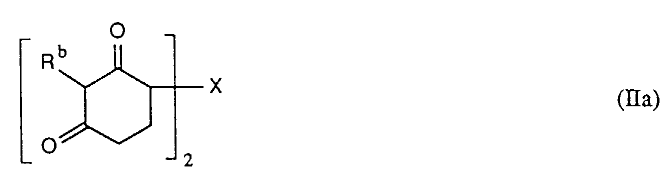 wobei
R^{a} Alkyl mit 1 bis 22 C-Atomen, C₅-C₁₀-Hydroxyalkyl, Alkenyl mit 2 bis 22 C-Atomen, Phenyl, mit -OH, C₁-C₄-Alkyl, C₁- bis C₄-Alkoxy oder Halogen substituiertes Phenyl, Phenyl-C₁-C₄-alkyl, eine Gruppe der Formel 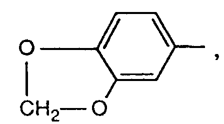 Cycloalkyl mit 5 bis 12 Ring-C-Atomen, oder mit 1 bis 3 C₁-C₄-Alkylgruppen substituiertes Cycloalkyl mit 5 bis 12 Ring-C-Atomen bedeutet,
R^{c} Alkyl mit 1 bis 22 C-Atomen, C₅-C₁₀-Hydroxyalkyl, Alkenyl mit 2 bis 22 C-Atomen, Phenyl, mit -OH, C₁-C₄-Alkyl, C₁- bis C₄-Alkoxy oder Halogen, substituiertes Phenyl oder Phenyl-C₁-C₄-alkyl, eine Gruppe der Formel 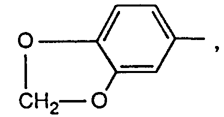 Cycloalkyl mit 5 bis 12 Ring-C-Atomen, oder mit 1 bis 3 C₁ bis C₄-Alkylgruppen substituiertes Cycloalkyl mit 5 bis 12 Ring-C-Atomen bedeutet,
R^{b} -H, Alkyl mit 1 bis 18 C-Atomen, Alkenyl mit 2 bis 12 C-Atomen, Phenyl, C₁-C₄-Alkyl substituiertes Phenyl, Phenyl-C₁-C₄-alkyl, oder eine Gruppe der Formel 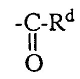 bedeutet,
wobei R^{d}-CH₃, -C₂H₅ oder Phenyl darstellt oder worin
R^{a} und R^{b} zusammen die Bedeutung eines Tetramethylenrestes oder eines Tetramethylenrestes, der mit einem Benzorest anelliert ist, aufweisen, und X Alkylen mit 1 bis 4 C-Atomen bedeutet.

10. Polymerzusammensetzung gemäss Anspruch 2, enthaltend als d) mindestens ein 1,3-Diketon der allgemeinen Formel IIb 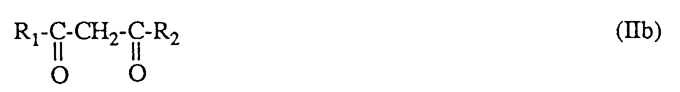 worin R₁ C₁-C₁₀-Alkyl, C₅-C₁₀-Hydroxyalkyl, Phenyl, Hydroxyphenyl, C₇-C₁₀-Phenylalkyl oder am Phenylring durch eine OH-Gruppe substituiertes C₇-C₁₀-Phenylalkyl ist und R₂ C₅-C₁₀-Hydroxyalkyl, Hydroxyphenyl oder am Phenylring durch eine OH-Gruppe substituiertes C₇-C₁₀-Phenylalkyl darstellt, mit der Bedingung, dass R₂ verschieden von Hydroxyphenyl ist, wenn R₁ Phenyl oder Hydroxyphenyl bedeutet.

11. Polymerzusammensetzung nach Anspruch 3, enthaltend als e) mindestens eine Ca-Seife der allgemeinen Formel Ca-(OOCR^{x})₂, wobei R^{x} eine Alkylgruppe mit 1 bis 22 C-Atomen oder eine Alkenylgruppe mit 2 bis 22 C-Atomen, Phenyl, Phenyl-C₁-C₄-alkyl oder C₁-C₈-Alkylphenyl darstellt.

12. Polymerzusammensetzung nach Anspruch 4, enthaltend als Derivat von Polyalkylpiperidinen ein Derivat des 2,2,6,6-Tetramethylpiperidins.

13. Polymerzusammensetzung nach Anspruch 4, enthaltend als Derivat von Polyalkylpiperidinen eine Verbindung der Formel VIII 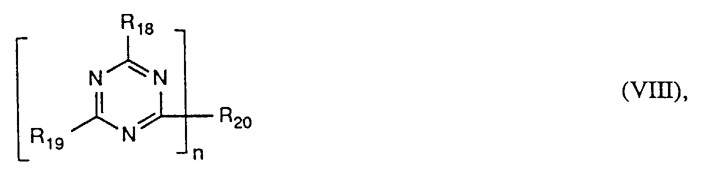 worin n die Zahl 1 oder 2 ist und R¹⁸ eine Gruppe der Formel 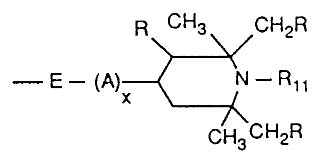 bedeutet, worin R Wasserstoff oder Methyl bedeutet, R¹¹ Wasserstoff, Oxyl, Hydroxyl, C₁-C₁₂-Alkyl, C₃-C₈-Alkenyl, C₃-C₈-Alkinyl, C₇-C₁₂-Aralkyl, C₁-C₁₈-Alkoxy, C₅-C₈-Cycloalkoxy, C₇-C₉-Phenylalkoxy, C₁-C₈-Alkanoyl, C₃ -C₅-Alkenoyl, C₁-C₁₈-Alkanoyloxy, Benzyloxy, Glycidyl oder eine Gruppe -CH₂CH(OH)-Z, worin Z Wasserstoff, Methyl oder Phenyl ist, bedeutet, E -O- oder -NR¹¹- ist, A C₂-C₆-Alkylen oder -(CH₂)₃-O- und x die Zahlen O oder 1 bedeuten, R¹⁹ gleich R¹⁸ oder eine der Gruppen -NR²¹R²², -OR²³, -NHCH₂OR²³ oder -N(CH₂OR²³)₂ ist, R²⁰, wenn n = 1 ist, gleich R¹⁸ oder R¹⁹, und wenn n = 2 ist, eine Gruppe -E-B-E- ist, worin B gegebenenfalls durch -N(R²¹)- unterbrochenes C₂-C₆-Alkylen bedeutet, R²¹ C₁-C₁₂-Alkyl, Cyclohexyl, Benzyl oder C₁-C₄-Hydroxyalkyl oder eine Gruppe der Formel 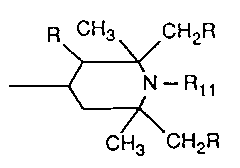 ist, R²² C₁-C₁₂ Alkyl, Cyclohexyl, Benzyl, C₁-C₄ Hydroxyalkyl und R²³ Wasserstoff, C₁-C₁₂ Alkyl oder Phenyl bedeuten oder R²¹ und R²² zusammen C₄-C₅-Alkylen oder -Oxaalkylen, beispielsweise 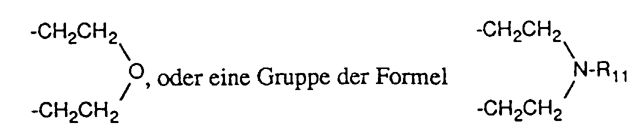 sind oder auch R²¹ und R²² jeweils eine Gruppe der Formel 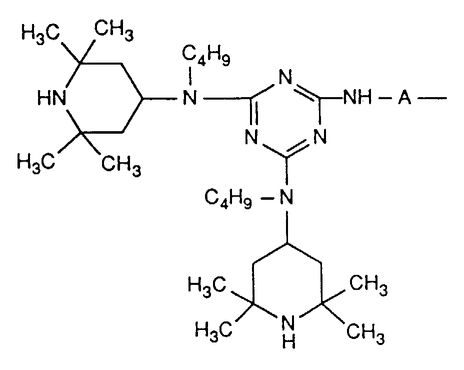 bedeuten.

14. Polymerzusammensetzung nach Anspruch 13, enthaltend eine der Verbindungen der Formel 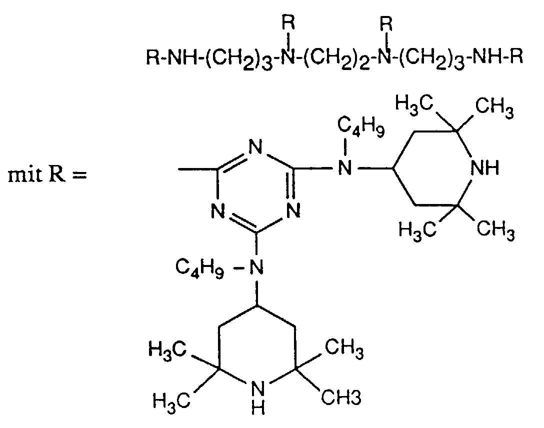 oder

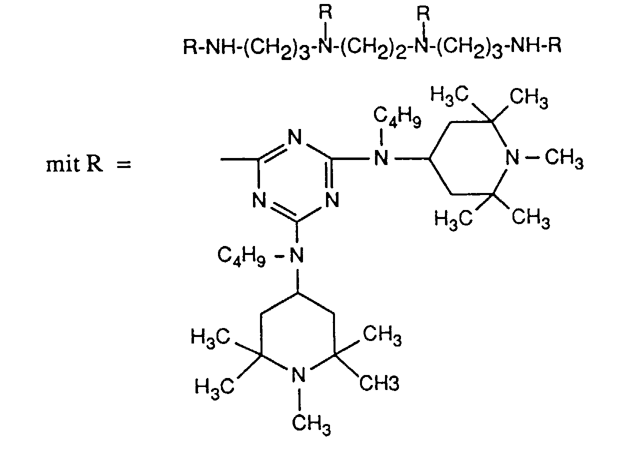

15. Polymerzusammensetzung nach Anspruch 4, enthaltend als Derivat von Polyalkylpiperidinen eine oligomere oder polymere Verbindung aus der Reihe der Polyester, Polyäther, Polyamide, Polyamine, Polyurethane, Polyharnstoffe, Polyaminotriazine, Poly(meth)acrylate, Poly(meth)acrylamide und deren Copolymere, deren wiederkehrende Struktureinheit einen 2,2,6,6-Tetramethylpiperidinrest der Formel III enthält.

16. Polymerzusammensetzung nach Anspruch 15, enthaltend eine Verbindung der Formel 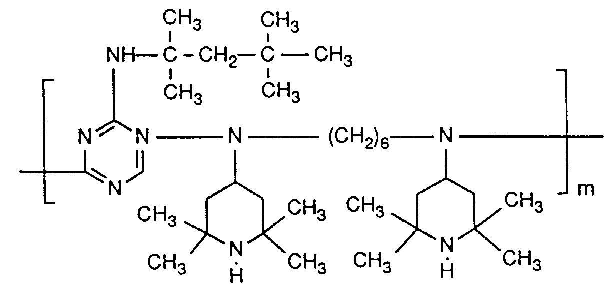 wobei m eine Zahl von 2 bis 200 bedeutet.

17. Polymerzusammensetzung nach Anspruch 6, enthaltend als b) eine organische Zinkverbindung, wobei die organische Zinkverbindung ein Salz einer Carbonsäure mit 7 bis 20 C-Atomen oder ein C₇-C₂₀-Alkylphenolat darstellt.

18. Polymerzusammensetzung nach Anspruch 1, enthaltend, bezogen auf die Zusammensetzung,
a) 0,01 bis 1,5 Gew.-Teile an cyclischen oder nicht cyclischen sterisch gehinderten Aminen,
b) 0,01 bis 2 Gew.-Teile an organischer oder anorganischer Zinkverbindung, und
c) 0,1 bis 3 Gew.-Teile an Verbindungen aus der Reihe der kristallinen Alkali-/Erdalkali-alumosilikate.

19. Polymerzusammensetzung nach Anspruch 1, enthaltend
d) 0,05 - 5 Gew.-Teile eines 1,3-Diketons.

20. Polymerzusammensetzung nach Anspruch 1, enthaltend
e) 0,05 - 5 Gew.-Teile einer organischen oder anorganischen Calcium-Verbindung.

21. Polymerzusammensetzung nach Anspruch 1, worin das Polymer Polyvinylchlorid ist oder dieses enthält.

22. Verwendung von Polymerzusammensetzungen nach Anspruch 1 als Hartprofile für Aussenanwendung oder als Hartfolien.

23. Verwendung von Polymerzusammensetzungen nach Anspruch 1 als "slush mold" oder als "crash-pads".

## Claims

1. A stabilised, chlorine-containing polymer composition comprising a chlorine-containing polymer and a stabiliser mixture comprising:
a) at least one cyclic or noncyclic, sterially hindered amine,
b) at least one organic zinc compound and/or inorganic zinc compound from the series consisting of the carbonates, chlorides, sulfates, oxides, hydroxides, basic oxides and mixed oxides, and
c) at least one compound from the series consisting of the crystalline alkali metal/alkaline earth metal alumosilicates.

2. A polymer composition according to claim 1, containing d) at least one 1,3-diketone.

3. A polymer composition according to claim 1, containing e) at least one organic or inorganic calcium compound.

4. A polymer composition according to claim 1, wherein a) is at least one cyclic, sterically hindered amine, in particular a compound from the series consisting of polyalkylpiperidine derivatives containing at least one group of the formula III 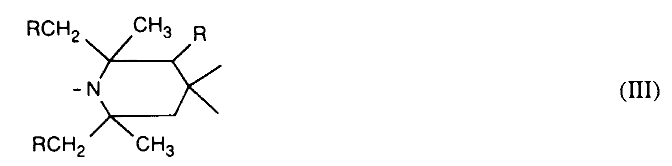 in which R is hydrogen or methyl.

5. A polymer composition according to claim 4, in which the polyalkylpiperidine radical of the formula III is 4-substituted by one or 2 polar substituents or by one polar spiro ring system.

6. A polymer composition according to claim 1, wherein b) is at least one organic zinc compound from the series consisting of the aliphatic saturated C₂-C₂₂carboxylates, aliphatic olefinic C₃-C₂₂carboxylates, aliphatic C₂-C₂₂carboxylates, which are substituted by at least one OH group, cyclic and bicyclic carboxylates having 5-22 carbon atoms, aromatic C₇-C₂₂carboxylates, aromatic C₇-C₂₂carboxylates which are substituted by at least one OH group, C₁-C₁₆alkyl-substituted phenyl carboxylates, phenyl-C₁-C₁₆alkyl carboxylates, C₆-C₁₈phenolates, C₅-C₂₆chelates of 1,3-diketones or β-ketocarboxylic esters or dehydracetic acid derivatives, and mercaptides based on mercaptocarboxylic esters and glycinates.

7. A polymer composition according to claim 1, wherein c) is at least one compound from the series consisting of NaA zeolites.

8. A polymer composition according to claim 7, wherein c) is Wessalith P.

9. A polymer composition according to claim 2, wherein d) is at least one 1,3-diketone of the general formula II or IIa, 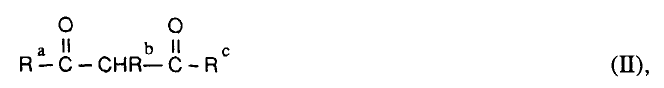 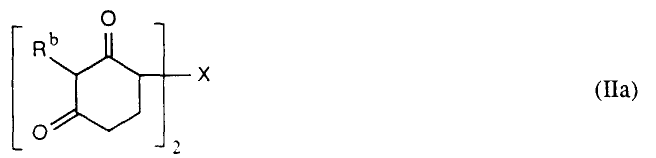 where
R^{a} is alkyl having 1 to 22 carbon atoms, C₅-C₁₀hydroxyalkyl, alkenyl having 2 to 22 carbon atoms, phenyl, phenyl which is substituted by -OH, C₁-C₄alkyl, C₁-C₄alkoxy or halogen, or is phenyl-C₁-C₄alkyl, a group of the formula 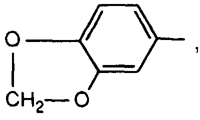 cycloalkyl having 5 to 12 ring carbon atoms, or cycloalkyl having 5 to 12 ring carbon atoms which is substituted by 1 to 3 C₁-C₄alkyl groups,
R^{c} is alkyl having 1 to 22 carbon atoms, C₅-C₁₀hydroxyalkyl, alkenyl having 2 to 22 carbon atoms, phenyl, phenyl which is substituted by -OH, C₁-C₄alkyl, C₁-C₄alkoxy or halogen, or is phenyl-C₁-C₄alkyl, a group of the formula 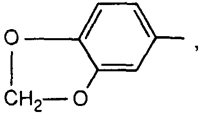 cycloalkyl having 5 to 12 ring carbon atoms, or cycloalkyl having 5 to 12 ring carbon atoms which is substituted by 1 to 3 C₁-C₄alkyl groups,
R^{b} is -H, alkyl having 1 to 18 carbon atoms, alkenyl having 2 to 12 carbon atoms, phenyl, C₁-C₄alkyl-substituted phenyl, phenyl-C₁-C₄alkyl, or a group of the formula 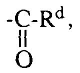 where R^{d} is -CH₃, -C₂H₅ or phenyl, or in which
R^{a} and R^{b} together are a tetramethylene radical or a tetramethylene radical which is fused to a benzene radical,
and X is alkylene having 1-4 carbon atoms.

10. A polymer composition according to claim 2, wherein d) is at least one 1,3-diketone of the general formula IIb 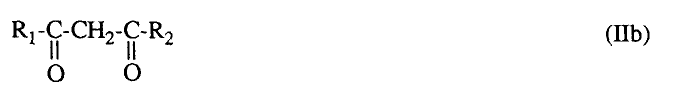 in which R₁ is C₁-C₁₀alkyl, C₅-C₁₀hydroxyalkyl, phenyl, hydroxyphenyl,
C₇-C₁₀phenylalkyl or C₇-C₁₀phenylalkyl which is substituted on the phenyl ring by an OH group, and R₂ is C₅-C₁₀hydroxyalkyl, hydroxyphenyl or C₇-C₁₀phenylalkyl which is substituted on the phenyl ring by an OH group, with the proviso that R₂ is not hydroxyphenyl if R₁ is phenyl or hydroxyphenyl.

11. A polymer composition according to claim 3, wherein e) is at least one calcium soap of the general formula Ca-(OOCR^{x})₂, where R^{x} is an alkyl group having 1 to 22 carbon atoms, an alkenyl group having 2 to 22 carbon atoms, phenyl, phenyl-C₁-C₄alkyl or C₁-C₈alkylphenyl.

12. A polymer composition according to claim 4, wherein the polyalkylpiperidine derivative is a derivative of 2,2,6,6-tetramethylpiperidine.

13. A polymer composition according to claim 4, wherein the polyalkylpiperidine derivative is a compound of the formula VIII 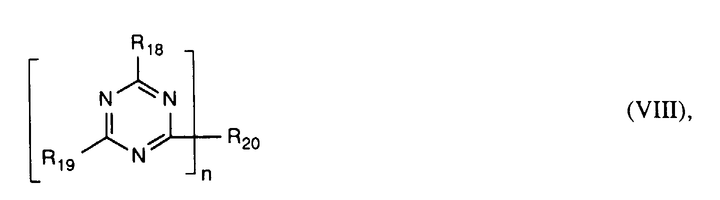 in which n is the number 1 or 2, and R¹⁸ is a group of the formula 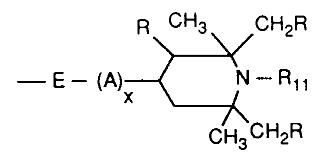 in which R is hydrogen or methyl, R¹¹ is hydrogen, oxygen, hydroxyl, C₁-C₁₂alkyl, C₃-C₈alkenyl, C₃-C₈alkynyl, C₇-C₁₂aralkyl, C₁-C₁₈alkoxy, C₅-C₈cycloalkoxy, C₇-C₉phenylalkoxy, C₁-C₈alkanoyl, C₃-C₅alkenoyl, C₁-C₁₈alkanoyloxy, benzyloxy, glycidyl or a -CH₂CH(OH)-Z group, in which Z is hydrogen, methyl or phenyl, E is -O- or -NR¹¹-, A is C₂-C₆alkylene or -(CH₂)₃-O-, and x is the number 0 or 1, R¹⁹ is identical to R¹⁸ or is one of the groups -NR²¹R²², -OR²³, -NHCH₂OR²³ or -N(CH₂OR²³)₂, R²⁰, if n = 1, is identical to R¹⁸ or R¹⁹ and, if n = 2, is an -E-B-E- group, in which B is C₂-C₆alkylene, which may be interrupted by -N(R²¹)-, R²¹ is C₁-C₁₂alkyl, cyclohexyl, benzyl or C₁-C₄hydroxyalkyl or a group of the formula 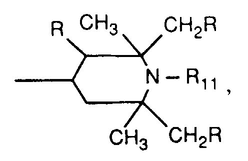 R²² is C₁-C₁₂alkyl, cyclohexyl, benzyl or C₁-C₄hydroxyalkyl, and R²³ is hydrogen, C₁-C₁₂alkyl or phenyl, or R²¹ and R²² together are C₄-C₅alkylene or -oxaalkylene, for example 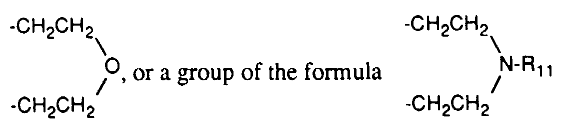 or alternatively R²¹ and R²² are each a group of the formula

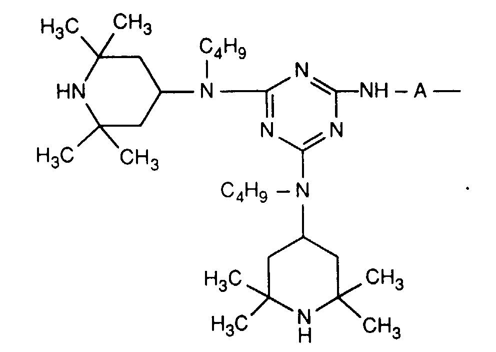

14. A polymer composition according to claim 13, wherein one of the compounds of the formula 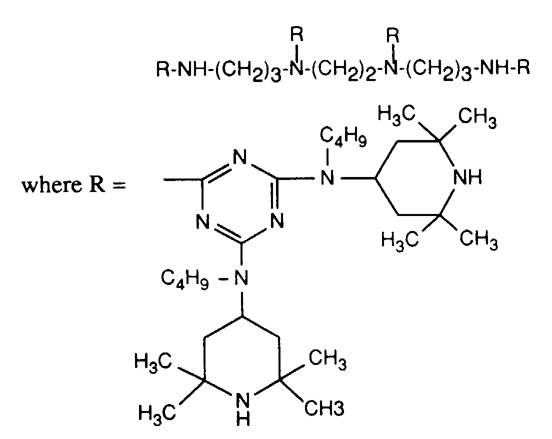 or 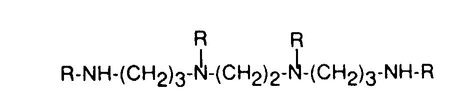 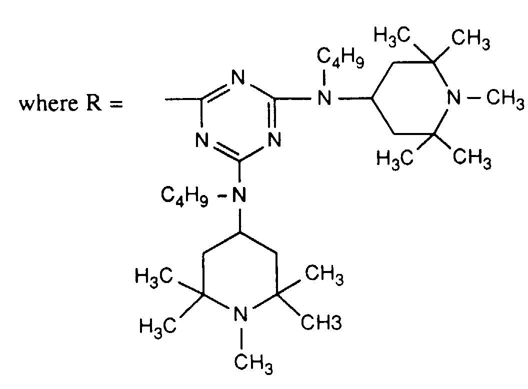 is present.

15. A polymer composition according to claim 4, wherein the polyalkylpiperidine derivative is an oligomeric or polymeric compound from the series consisting of the polyesters, polyethers, polyamides, polyamines, polyurethanes, polyureas, polyaminotriazines, poly(meth)acrylates, poly(meth)acrylamides, and copolymers thereof whose recurring structural unit contains a 2,2,6,6-tetramethylpiperidine radical of the formula III.

16. A polymer composition according to claim 15, wherein a compound of the formula 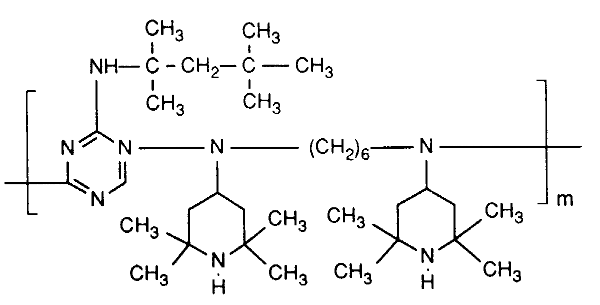 in which m is a number from 2 to 200, is present.

17. A polymer composition according to claim 6, wherein b) is an organic zinc compound, where the organic zinc compound is a salt of a carboxylic acid having 7 to 20 carbon atoms or a C₇-C₂₀alkylphenolate.

18. A polymer composition according to claim 1, comprising, based on the composition,
a) from 0.01 to 1.5 parts by weight of cyclic or noncyclic, sterically hindered amines,
b) from 0.01 to 2 parts by weight of an organic or inorganic zinc compound, and
c) from 0.1 to 3 parts by weight of compounds from the series consisting of the crystalline alkali metal/alkaline earth metal alumosilicates.

19. A polymer composition according to claim 1, containing
d) from 0.05 to 5 parts by weight of a 1,3-diketone.

20. A polymer composition according to claim 1, containing
e) from 0.05 to 5 parts by weight of an organic or inorganic calcium compound.

21. A polymer composition according to claim 1, in which the polymer is or contains polyvinyl chloride.

22. The use of a polymer composition according to claim 1 as a rigid profile for external applications or as rigid film or sheeting.

23. The use of a polymer composition according to claim 1 for slush moulding or for crash pads.

## Revendications

1. Composition de polymères chlorée stabilisée contenant un polymère chloré et un mélange de stabilisants, contenant,
a) au moins une amine cyclique ou non cyclique à encombrement stérique,
b) au moins un composé organique de zinc et/ou un composé inorganique de zinc de la famille des carbonates, des chlorures, des sulfates, des oxydes, des hydroxydes, des oxydes basiques et des oxydes mixtes et
c) au moins un composé de la famille des aluminosilicates cristallins de métaux alcalins/ alcalino-terreux.

2. Composition de polymères selon la revendication 1 contenant d) au moins une 1,3-dicétone.

3. Composition de polymères selon la revendication 1, contenant e) au moins un composé organique ou inorganique de calcium.

4. Composition de polymères selon la revendication 1, contenant en tant que a) au moins une amine cyclique à encombrement stérique, plus particulièrement un composé de la famille des dérivés de polyalkylpipéridines, qui contient au moins un groupe de formule III : 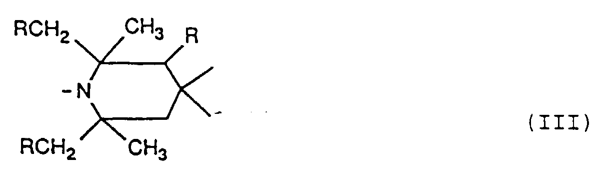 dans laquelle R représente un atome d'hydrogène ou un groupe méthyle.

5. Composition de polymères selon la revendication 4, dans laquelle le reste polyalkylpipéridine de formule III est substitué en position 4 par un ou deux substituants polaires ou un système cyclique spiro polaire.

6. Composition de polymères selon la revendication 1, contenant en tant que b) au moins un composé organique de zinc de la famille des carboxylates en C₂-C₂₂ aliphatiques, des carboxylates en C₃-C₂₂ aliphatiques oléfiniques, des carboxylates en C₂-C₂₂ aliphatiques qui sont substitués par au moins un groupe OH, des carboxylates cycliques et bicycliques avec 5 à 22 atomes de carbone, des carboxylates en C₇-C₂₂ aromatiques, des carboxylates en C₇-C₂₂ aromatiques substitués par au moins un groupe OH, des phénylcarboxylates substitués par alkyles en C₁-C₁₆, des phényl(alkyl en C₁-C₁₆)carboxylates, des phénolates en C₆-C₁₈, des chélates en C₅-C₂₆, des 1,3-dicétones ou des esters d'acides β-cétocarboxyliques ou des dérivés de l'acide dehydracétique, ainsi que des mercaptides à base des acides mercaptocarboxyliques et de glycinates.

7. Composition de polymères selon la revendication 1, contenant en tant que c) au moins un composé de la famille des zéolites NaA.

8. Composition de polymères selon la revendication 7, contenant en tant que c) Wessalith P.

9. Composition de polymères selon la revendication 2, contenant en tant que d) au moins une 1,3-dicétone de formule générale II ou IIa : 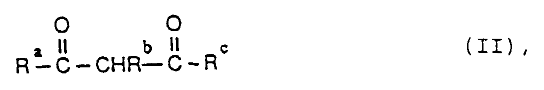 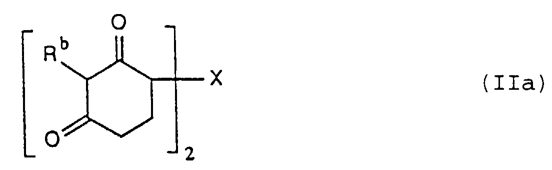 où
R^{a} représente un groupe alkyle avec 1 à 22 atomes de carbone, hydroxyalkyle en C₅-C₁₀, alcényle avec 2 à 22 atomes de carbone, phényle, phényle substitué par 1 à 3 groupes de la famille des OH, alkyle en C₁-C₄, alcoxy en C₁-C₄ ou halogène, phénylalkyle en C₁-C₄, un groupe de formule 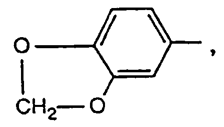 cycloalkyle avec 5 à 12 atomes de carbone dans le cycle ou cycloalkyle avec 5 à 12 atomes de carbone dans le cycle substitué par 1 à 3 groupes alkyle en C₁-C₄,
R^{c} représente alkyle avec 1 à 22 atomes de carbone, hydroxyalkyle en C₅-C₁₀, alcényle avec 2 à 22 atomes de carbone, phényle, phényle substitué par 1 à 3 groupes pris parmi les groupes OH, alkyle en C₁-C₄, alcoxy en C₁-C₄ ou halogène, ou phénylalkyle en C₁-C₄, un groupe de formule 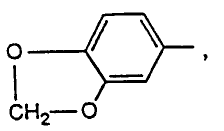 cycloalkyle avec 5 à 12 atomes de carbone dans le cycle ou cycloalkyle avec 5 à 12 atomes de carbone dans le cycle, substitué par 1 à 3 groupes alkyle en C₁-C₄,
R^{b} représente un atome d'hydrogène, des groupes alkyle avec 1 à 18 atomes de carbone, alcényle avec 2 à 12 atomes de carbone, phényle, phényle substitué par alkyle en C₁-C₄, phénylalkyle en C₁-C₄ ou un groupe de formule 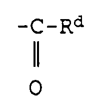 où R^{d} représente -CH₃, -C₂H₅ ou phényle ou
R^{a} et R^{b} ensemble signifient un reste tétraméthylène ou un reste tétraméthylène qui est condensé sur un reste benzène et X représente alkylène avec 1 à 4 atomes de carbone.

10. Composition de polymères selon la revendication 2, contenant en tant que d) au moins une 1,3-dicétone de formule générale IIb 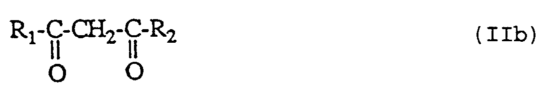 dans laquelle R₁ représente alkyle en C₁-C₁₀, hydroxyalkyle en C₅-C₁₀, phényle, hydroxyphényle, phénylalkyle en C₇-C₁₀ ou phénylalkyle en C₇-C₁₀ substitué sur le cycle phényle par un groupe OH et R₂ représente les groupes hydroxyalkyle en C₅-C₁₀, hydroxyphényle ou phénylalkyle en C₇-C₁₀ substitué sur le cycle phényle par un groupe OH, à la condition que R₂ soit différent du groupe hydroxyphényle lorsque R₁ représente phényle ou hydroxyphényle.

11. Composition de polymères selon la revendication 3, contenant en tant que e) au moins un savon calcique de formule générale Ca-(OOCR^{x})₂, R^{x} étant un groupe alkyle avec 1 à 22 atomes de carbone ou un groupe alcényle avec 2 à 22 atomes de carbone, phényle, phénylalkyle en C₁-C₄ ou alkylphényle en C₁-C₈.

12. Composition de polymères selon la revendication 4, contenant en tant que dérivé de polyalkylpipéridines un dérivé de la 2,2,6,6-tétraméthylpipéridine.

13. Composition de polymères selon la revendication 4, contenant en que dérivé de polyalkylpipéridines un composé de formule VIII 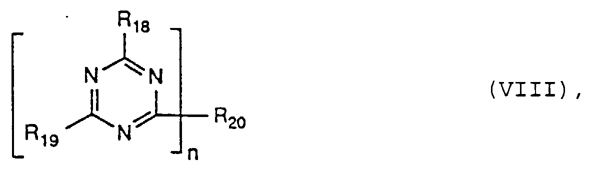 dans laquelle n vaut 1 ou 2 et R¹⁸ représente un groupe de formule : 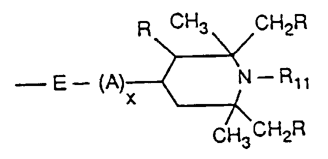 dans laquelle R représente un atome d'hydrogène ou un groupe méthyle, R¹¹ représente un atome d'hydrogène, des groupes oxyle, hydroxyle, alkyle en C₁-C₁₂, alcényle en C₃-C₈, alcynyle en C₃-C₈, aralkyle en C₇-C₁₂, alcoxy en C₁-C₁₈, cycloalcoxy en C5-C8, phénylalcoxy en C7-C9, alcanoyle en C₁-C₈, alcénoyle en C₃-C₈, alcanoyloxy en C₁-C₁₈, benzyloxy, glycidyle ou un groupe CH₂CH(OH)-Z, dans laquelle Z représente un atome d'hydrogène, des groupes méthyle ou phényle, E représente -O- ou le groupe -NR¹¹-, A représente un groupe alkylène en C₂-C₆ ou -(CH₂)₃-O- et x vaut 0 ou 1, R¹⁹ est égal à R¹⁸ ou représente un des groupes -NR²¹R²², -OR²³, -NHCH₂OR²³ ou -N(CH₂OR²³)₂, R²⁰ lorsque n est égal à 1, est égal à R¹⁸ ou à R¹⁹ lorsque n = 2 représente un groupe -E-B-E-, dans lequel B représente alkylène en C₂-C₆ éventuellement interrompu par -N(R²¹)-, R²¹ représente des groupes alkyle en C₁-C₁₂, cyclohexyle, benzyle ou hydroxyalkyle en C₁-C₄ ou un groupe de formule 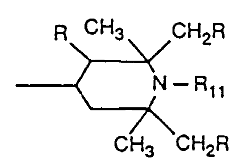 R²² représente des groupes alkyle en en C₁-C₁₂, cyclohexyle, benzyle, hydroxyalkyle en C₁-C₄ et R²³ représente un atome d'hydrogène, des groupes alkyle en C₁-C₁₂ ou phényle, ou R²¹ et R²² ensemble représentent des groupes alkylène en C₄-C₅ ou oxaalkylène en C₄-C₅, par exemple 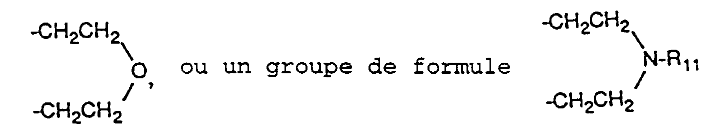 ou aussi R²¹ et R²² chacun représentent un groupe de formule :

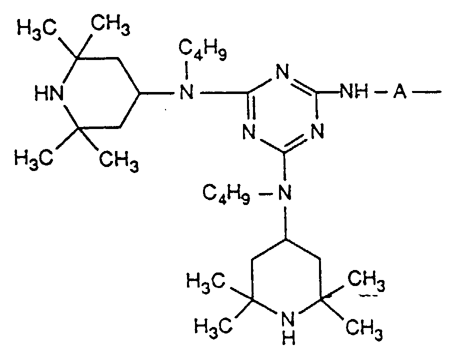

14. Composition de polymères selon la revendication 13, contenant un composé de formule 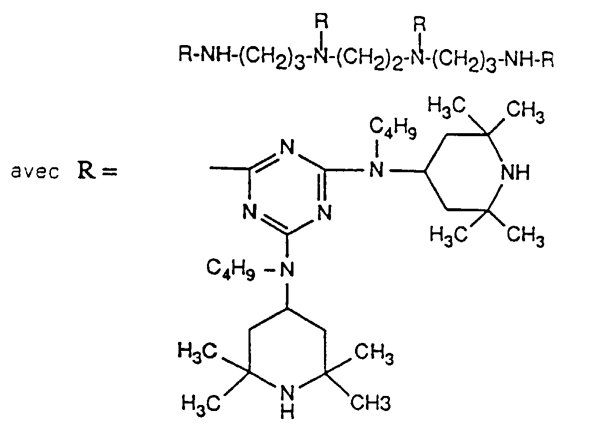 ou

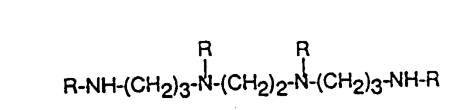

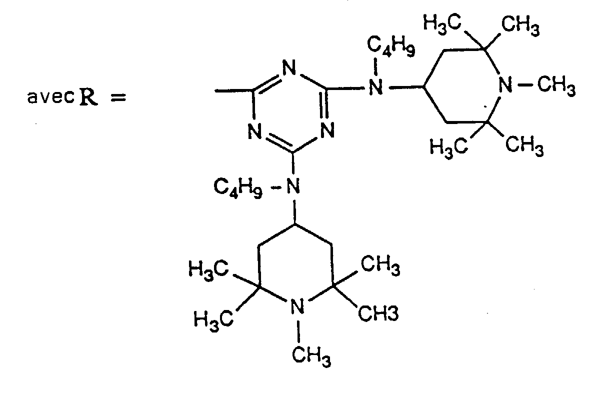

15. Composition de polymères selon la revendication 4, contenant en tant que dérivé de polyalkylpipéridines un composé oligomère ou polymère pris dans la famille des polyesters, des polyéthers, des polyamides, des polyamines, des polyuréthannes, des polyurées, des polyaminotriazines, des poly(méth)acrylates, des poly(méth)acrylamides et leurs copolymères avec une unité de structure répétitive d'un reste 2,2,6,6-tétraméthylpipéridine de formule III.

16. Composition de polymères selon la revendication 15, contenant un composé de formule 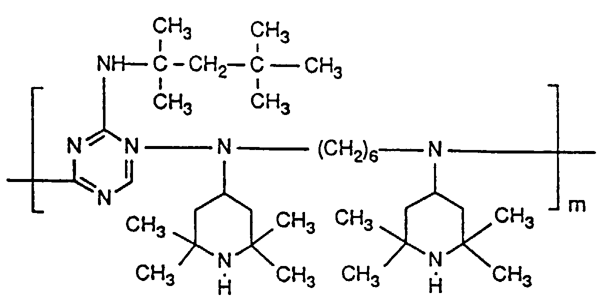 m étant un nombre de 2 à 200.

17. Composition de polymères selon la revendication 6, contenant en tant que b) un composé organique de zinc avec un composé organique de zinc étant un sel d'un acide carboxylique avec 7 à 20 atomes de carbone ou un (alkyl en C₇-C₂₀)phénolate.

18. Composition de polymères selon la revendication 1 contenant, par rapport à la totalité de la composition,
a) de 0,01 à 1,5 partie d'amines cycliques ou non cyclique à encombrement stérique,
b) de 0,01 à 2 parties en poids de composé organique ou inorganique de zinc et
c) de 0,1 à 3 parties en poids de composés de la famille des aluminosilicates cristallins de métaux alcalins/alcalino-terreux.

19. Composition de polymères selon la revendication 1, contenant
d) de 0,05 à 5 parties en poids d'une 1,3-dicétone.

20. Composition de polymères selon la revendication 1, contenant
e) de 0,05 à 5 parties en poids d'un composé de calcium organique ou inorganique.

21. Composition de polymères selon la revendication 1, dans laquelle le polymère est le chlorure de polyvinyle ou un polymère contenant le PVC.

22. Utilisation de la composition de polymères selon la revendication 1 en tant que profilés rigides pour des applications extérieures ou comme feuilles rigides.

23. Utilisation des compositions de polymères selon la revendication 1, en tant que coulée en moules creux ou "crash-pads".
